(19) Europäisches Patentamt / European Patent Office / Office européen des brevets

(11) **EP 2 949 704 B1**

(12) **EUROPÄISCHE PATENTSCHRIFT**

(45) Veröffentlichungstag und Bekanntmachung des Hinweises auf die Patenterteilung:
**24.04.2019 Patentblatt 2019/17**

(51) Int Cl.:
*C08L 77/06* (2006.01)    *C08K 3/30* (2006.01)

(21) Anmeldenummer: **15169586.3**

(22) Anmeldetag: **21.12.2012**

(54) **ANFÄRBERESISTENTE ARTIKEL UND IHRE VERWENDUNG**

DISCOLOURATION-RESISTANT ARTICLES AND THEIR USE

ARTICLE RÉSISTANT À LA COLORATION ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.12.2015 Patentblatt 2015/49**

(62) Dokumentnummer(n) der früheren Anmeldung(en) nach Art. 76 EPÜ:
**12198915.6 / 2 746 342**

(73) Patentinhaber: **EMS-PATENT AG**
**7013 Domat / Ems (CH)**

(72) Erfinder:
• **Aepli, Etienne**
**7013 Domat/Ems (CH)**
• **Pfleghar, Mark**
**7013 Domat/Ems (CH)**
• **Hoffmann, Botho**
**7013 Domat/Ems (CH)**
• **Hoff, Heinz**
**7015 Tamins (CH)**

(74) Vertreter: **Bremi, Tobias Hans**
**Isler & Pedrazzini AG**
**Giesshübelstrasse 45**
**Postfach 1772**
**8027 Zürich (CH)**

(56) Entgegenhaltungen:
EP-A1- 0 725 101        EP-A1- 0 837 087
EP-A1- 1 570 983        EP-A1- 2 028 231
WO-A1-2012/049255        WO-A2-2009/132989

**EP 2 949 704 B1**

**Beschreibung**

TECHNISCHES GEBIET

Die vorliegende Erfindung betrifft die Verwendung von Formmassen für Artikel, insbesondere Gehäuse oder Gehäuseteile für elektronisch tragbare Geräte, die eine geringe Anfärbeneigung besitzen.

STAND DER TECHNIK

Insbesondere im Zusammenhang mit der Herstellung von Gehäusen für beispielsweise Mobiltelefone, tragbare Computer, etc., stellt sich das Problem, dass gewisse üblicherweise dafür verwendete Materialien, wenn sie mit Stoffen, die beim bestimmungsgemäßen Gebrauch ohne weiteres in Kontakt mit solchen Gehäusen kommen können, in einer Weise verschmutzt respektive eingefärbt werden, dass diese Einfärbung nachhaltig nicht mehr entfernt werden kann. Dies ist ein gravierender Nachteil, der im Zusammenhang mit Polyamid grundsätzlich bereits aus völlig anderen Anwendungen bekannt ist, so beispielsweise aus der Herstellung von Teppichen oder ähnlichem. In diesem Zusammenhang wurde entsprechend bereits vorgeschlagen, auf das als Grundmaterial verwendete Polyamid eine Beschichtung aufzutragen, die diese Anfälligkeit für Schmutzaufnahme reduziert. Solche zusätzlichen Beschichtungen oder Tauchbäder sind aber keine nachhaltige Lösung, da sie üblicherweise nicht für längere Zeit auf der Oberfläche verbleiben, wenn die Oberfläche mechanisch belastet wird oder mit Wasser, Schweiss und/oder Lösungsmitteln in Kontakt kommt.

Die US2004/046279 beschreibt die Herstellung von Polyamid-basierten Fasern mit hoher Schmutzresistenz, wobei als Basis u.a. auch ein semi-aromatisches Polyamid eingesetzt werden kann. Das Polyamid wird dabei zur Erhöhung der Resistenz bei der Herstellung mit einem speziellen Reagens, namentlich einem Terpolymer, ggf. in Kombination mit einem teilkristallinen thermoplastischen Polyester oder einem teilkristallinen thermoplastischen Polyamid, umgesetzt.

Die WO2012/049252A2 beschreibt anfärberesistente Artikel auf Basis von semi-aromatischen, teilkristallinen und hochschmelzenden, nicht transparenten Polyamidformmassen, die Terephthalsäure und ein aliphatisches Diamin mit mindestens 8 C-Atomen enthalten, so z.B. Systeme des Typs 9T oder 10T. Daneben enthalten diese Formmassen zwingend einen Verstärkungsstoff sowie ein Weisspigment. Die Artikel sollen einen Weissgrad (L*, Luminanz) von mindestens 70 im CIE Lichtraum gemessen nach ASTM E308-08 aufweisen. U.a. wird gezeigt, dass die weisspigmentierten und glasfaserverstärkten semi-aromatischen Polyamidfrommassen auf Basis von 9T und 10T die Farbe des als Test verwendeten Wangenrouges weniger stark annehmen als die Polyamide PA 66, PA 1010 oder PA 6T/66.

In der WO2012/049255A1 werden ebenfalls Artikel, insbesondere Gehäuse für tragbare elektronische Geräte, hergestellt aus semi-aromatischen, teilkristallinen und hochschmelzenden, nicht transparenten Polyamiden, beschrieben, die eine hohe Anfärberesistenz aufweisen sollen. Die Polyamide basieren auf den Monomeren Terephthalsäure, Isophthalsäure und aliphatischen Diaminen mit 6 Kohlenstoffatomen. Die Formmassen beinhalten ebenfalls ein Verstärkungsmittel sowie ein Weisspigment. Auch hier wird ein Weissgrad von mindestens 70 gefordert. In den Beispielen wird gezeigt, dass die Formmasse auf Basis des teilkristallinen, teilaromatischen Polyamids PA 6T/6I eine geringere Anfärbeneigung im Vergleich zu den teilkristallinen Polyamidformmassen auf Basis von PA 66 und PA 6T/66 besitzt.

Aus der EP-A-0725101 sind farblose, amorphe Polyamide oder deren Blends oder Legierungen und daraus herstellbare Formteile mit hoher Wechselbiegefestigkeit bekannt, die aus alkylsubstituierten cycloaliphatischen 14-22C Diaminen und unverzweigten aliphatischen 8-14C Dicarbonsäuren aufgebaut sind, oder aus unverzweigten aliphatischen 8-14C Diaminen und cycloaliphatischen 7-36C Dicarbonsäuren. Es werden die reinen farblosen, amorphen Polyamide beschrieben sowie auf Mischungen mit Homopolyamiden hingewiesen.

Die EP-A-0837087 beschreibt Polyamidformmassen, oder Legierungen oder Mischungen aus Polyamiden, zur Herstellung von Artikeln für (elektro-) optische Anwendungen. Die Formmasse ist dabei aus mindestens einem Polyamid-Homopolymer aus langkettigen aliphatischen Monomeren und cycloaliphatischen Monomeren aufgebaut. Als Legierungen werden Mischungen mit PA 12 oder PA 11 als Legierungskomponenten vorgeschlagen oder weitere amorphe Polyamide.

Die EP-A-1570983 beschreibt Werkstoffverbunde aus einem Formteil aus mindestens einer transparenten oder transluzenten färbbaren Kunststoff-Formmasse enthaltend ein Gleitmittel. Das Formteil ist mit mindestens einer transparenten oder transluzenten Oberflächenschicht, Dekorfolie, funktionalen Schicht, Gummi oder anderen Kunststoffen verbunden. Die Polyamide sind z.B. auf Basis von MACM aufgebaut, Blends werden aber nur mit aliphatischen Homopolyamiden beschrieben.

Die WO2009/132989 offenbart Polyamidformmassen, die sich durch gute Verarbeitbarkeit, insbesondere im Spritzguss, bei akzeptabler Deformation im Klimatest, guter Transparenz, geringem Haze und sogar erhöhtem Bioanteil auszeichnen. Die Polyamidformmassen auf Basis von transparenten Copolyamiden enthalten: (A) 40 bis 100 Gew.-% mindestens eines transparenten Copolyamids mit einer Glasübergangstemperatur (Tg) von wenigstens 80 °C und höchstens 150 °C, aufgebaut aus mindestens zwei voneinander verschiedenen Diaminen, ausgewählt aus einer Mischung aus (a) 50 bis 90 Mol-% MACM und/oder EACM und/oder TMACM und (b) 10 bis 50 Mol-% aliphatisches Diamin mit 9 bis 14 Kohlenstoffatomen, jeweils bezogen auf die Gesamtmenge an Diaminen, sowie - aus einer oder mehreren aliphatischen Dicarbonsäuren, insbesondere mit 6 bis 36 Kohlenstoffatomen, (B) 0 bis 60 Gew.-% mindestens eines weiteren Polymeren, (C) 0 bis 10 Gew.-% übliche Additive, wobei die Summe der Komponenten (A), (B) und (C) 100 Gew.-% ergibt. Mischungen mit anderen Polyamiden werden beschrieben, aber nur mit aliphatischen anderen Polyamiden.

Die EP 2 028 231 beschreibt verstärkte Polyamidformmassen, enthaltend hochschmelzende, teilaromatische Polyamide und flache Glasfasern, insbesondere mit einem rechteckigen Querschnitt, d.h. Glasfasern mit nicht kreisförmiger Querschnittsfläche und einem Abmessungsverhältnis von der Haupt-Querschnittsachse zur NebenQuerschnittsachse von 2 bis 6, insbesondere 3 bis 6, ganz besonders bevorzugt von 3,5 bis 5,0.

DARSTELLUNG DER ERFINDUNG

Es ist entsprechend unter anderem Aufgabe der vorliegenden Erfindung, neue Verwendungen von Polyamiden für Artikel, insbesondere Gehäuse oder Gehäuseteile für tragbare elektronische Geräte, mit verbesserter Anfärberesistenz zur Verfügung zu stellen. Darüber hinaus weisen diese Artikel gute mechanische Eigenschaften auf, insbesondere hohe Steifigkeit, hohe Festigkeit, gute Schlagzähigkeit, und hohe Dimensionsstabilität, sowie insbesondere auch gute Oberflächeneigenschaften und daneben gute Verarbeitungseigenschaften wie insbesondere eine kleine Verarbeitungsschwindung und einen geringen Verzug. Die zugrundeliegenden Polyamidformmassen zeichnen sich neben der unerwartet geringen Anfärbeneigung durch eine geringe Wasseraufnahme, ausreichende Temperaturbeständigkeit, gute Chemikalienbeständigkeit und gute mechanische Eigenschaften aus.

Erreicht wird die Anfärberesistenz indem die Artikel, die Gehäuse oder Gehäuseteile aus Formmassen enthaltend Polyamide auf Basis von cycloaliphatischen Diaminen hergestellt werden.

Anfärberesistenz im Sinne der Erfindung bedeutet, dass die Artikel bzw. Gehäuse im Kontakt mit Färbemittel des täglichen Lebens, wie z.B. Makeup (Lippenstift, Lipgloss, Wangenrouge) oder natürlichen und künstlichen Farben, wie z.B. in Softdrinks, Ketchup, Rotwein, Senf oder auch Farben und Pigmenten in Kleidern oder Leder keine oder nur sehr geringe nachhaltige Farbänderungen erfahren.

Diese Aufgabe wird durch die Verwendung gemäss Anspruch 1 gelöst insbesondere durch die Verwendung solcher Formmassen zur Herstellung von anfärberesistenten Bauteilen oder Gehäusen für tragbare elektronische Geräte.

Konkret betrifft die vorliegende Erfindung die Verwendung von Polyamidformmassen zur Herstellung von anfärberesistenten Artikeln, wobei die Formmasse besteht aus:

(A) 30 - 100 Gew.-% eines Polyamids oder einer Polyamidmischung, bestehend aus:

(A1) 50-100 Gew.-% mindestens eines amorphen und/oder mikrokristallinen Polyamids mit einer Glasübergangstemperatur von wenigstens 100°C, basierend auf:

(a1) 20-100 Mol-% wenigstens eines cycloaliphatischen Diamins; und 0-80 Mol-% wenigstens eines anderen aliphatischen und/oder aromatischen Diamins (wobei sich die Mol-% innerhalb der Komponente (a1) auf 100 Mol-% Diamine ergänzen); sowie
(a2) aromatischen und/oder aliphatischen Dicarbonsäuren mit mindestens 6 Kohlenstoffatomen,

mit der Massgabe, dass bis zu 45 Mol-% der Gesamtheit der Monomere der Komponenten (a1) und (a2) ersetzt sein können durch Lactame mit 6 bis 12 Kohlenstoffatomen oder Aminocarbonsäuren mit 6 bis 12 Kohlenstoffatomen;
wobei sich (A1) und (A2) auf 100% Komponente (A) ergänzen;
(A2) 0 - 50 Gew.-% mindestens eines von (A1) verschiedenen, teilaromatischen Polyamids;

(B) 10 - 70 Gew.-% faserförmige (B1), insbesondere Glasfasern, und partikuläre (B2) Zuschlagstoffe
(C) 0 - 30 Gew.-% Schlagzähmodifikator und/oder von (A) verschiedene Polymere
(D) 0 - 25 Gew.-% eines Flammschutzmittels, wobei dieses vorzugsweise halogenfrei ist,
(E) 0 - 3 Gew.-% Additive;

wobei die Summe der Bestandteile (A) - (E) 100 Gew.-% ausmacht.

Die Verwendung ist dabei zur Herstellung eines anfärberesistenten Artikels, bei welchem die Anfärbeneigung (AN) des Artikels 1 oder 2 ist, vorgesehen.

Die Komponente (A) besteht damit entweder aus einem oder mehreren Polyamiden des Aufbaus (A1) oder einer Mischung aus einem oder mehreren solchen Polyamiden mit teilaromatischen Polyamiden (A2), wobei die Komponente (A2) in dieser Mischung höchstens 50 Gew.-%, bevorzugt höchstens 40 Gew.-% und besonders bevorzugt höchstens 35 Gew.-%, bezogen auf die Polyamidmischung A, ausmacht. Somit wird Komponente A2 bevorzugt im Bereich von 0 - 40, z.B. im Bereich von 5 - 35 Gew.-%, jeweils bezogen auf Komponente A, eingesetzt.

Bevorzugtermassen liegt dabei der Anteil an Komponente (A) im Bereich von 30-90 Gew.-%, vorzugsweise im Bereich von 30-80 Gew.-%.

Der Anteil an Komponente (B) liegt bevorzugtermassen im Bereich von 10-65 Gew.-%, vorzugsweise im Bereich von 20-60 Gew.-%.

Der Anteil an Komponente (C) liegt bevorzugtermassen im Bereich von 1-25 Gew.-%, vorzugsweise im Bereich von 2-15 Gew.-%.

Der Anteil an Komponente (D) liegt bevorzugtermassen im Bereich von 5-25 Gew.-%, vorzugsweise im Bereich von 5-20 Gew.-%.

Der Anteil an Komponente (E) liegt bevorzugtermassen im Bereich von 0.1-2 Gew.-%, vorzugsweise im Bereich von 0.2-1.5 Gew.-%.

Artikel, Formkörper oder Formteil gemäss der Erfindung haben eine geringe Anfärbeneigung (AN). D.h. der gemäss EN ISO 11664-4 im CIELAB-Farbraum bestimmte E-Wert (Farbort) wird durch den unten beschriebenen Anfärbetest nur wenig verändert. Konkret heisst das, der im unten beschriebenen Anfärbetest ermittelte ΔE-Wert ist höchstens 6, bevorzugt höchstens 5, insbesondere bevorzugt höchstens 4. Gleichzeitig weisen die Artikel sowohl vor als auch nach der Anfärbung eine Luminanz L* von bevorzugtermassen > 80, vorzugsweise > 90, insbesondere vorzugsweise > 95 auf. Bevorzugtermassen ist alternativ oder zusätzlich der Betrag von a* respektive unabhängig davon Betrag von b* jeweils < 10, vorzugsweise < 5, insbesondere vorzugsweise < 3 ganz besonders bevorzugt im Bereich von 0. Für die Bauteile sind L*-Werte von> 96 besonders bevorzugt.

Die CIE L*, a*, und b*-Werte wurden auf einem Spectrophotometer der Firma Datacolor (Gerätebezeichnung: Datacolor 650) unter den folgenden Messbedingungen vor einem weisslackierten Kontrastblech bestimmt, Messmodus: Reflexion, Messgeometrie: D/8°, Lichtart: D6510, Glanz: eingeschlossen, Kalibrierung: UV-kalibriert, Messblende: SAV (Small Area View, 9 mm illuminated, 5 mm measured). Bei Verwendung der L*, a*, und b*-Werte von Referenz und Probe entsprechend dem CIELAB Systems (EN ISO 11664-4, bis 2011 DIN 6174) berechnet sich die Farbhelligkeitsdifferenz ΔL* wie folgt:

$$\Delta L^* = L^*_{Probe} - L^*_{Referenz}$$

Der Farbabstand ΔE zwischen den Farborten $(L^*a^*b^*)_{Referenz}$ und $(L^*a^*b^*)_{Probe}$ wird gemäss ISO 12647 und ISO 13655 als euklidischer Abstand wie folgt berechnet:

$$\Delta E = \sqrt{(L^*_{Probe} - L^*_{Referenz})^2 + (a^*_{Probe} - a^*_{Referenz})^2 + (b^*_{Probe} - b^*_{Referenz})^2}$$

Die Anfärbeneigung (AN) im beschriebenen Anfärbetest wird durch die Änderung des Farbeindrucks ΔE quantifiziert; sie wird wie folgt klassifiziert:

AN=1: Keine oder nur sehr geringe Anfärbung (0≤ ΔE ≤2)
AN=2: Geringe Anfärbung (2 < ΔE ≤ 6)
AN=3: Deutliche Anfärbung (6 < ΔE ≤12)
AN=4: Starke Anfärbung (entspricht einem ΔE >12)

Erfindungsgemässe Artikel (Formteile, Bauteile) haben eine Anfärbeneigung von 1 oder 2, d.h. der ΔE-Wert liegt bei maximal 6.

Die Anfärbeneigung der Formteile wird mittels der folgenden Anfärbemedien überprüft:

- Lipgloss: Maybelline Color Sensational Cream Gloss Fabulous Pink 137 (Maybelline New York, Jade Düsseldorf, Gemey-Paris, 16 Place Vendome, 75001 Paris) oder
- Senf: Thomy scharfer Senf (Nestle Suisse AG, 1800 Vevey, Schweiz)

Diese Medien wurden aus einer grossen Gruppe getesteter Mittel ausgewählt, weil sie die stärksten Farbänderungen auf den aus Polyamid hergestellten Formteilen hervorrufen und damit die beste Unterscheidungskraft hinsichtlich der Anfärbeneigung aufweisen. So verursachen z.B. Olivenöl, Sonnencreme oder auch übliches Ketchup nur sehr geringe Farbänderungen auf den Probekörpern, was eine Differenzierung zwischen den verwendeten Polyamidformmassen erschwert bzw. unmöglich macht.

Beim Anfärbetest werden die Anfärbemedien auf die Oberfläche der Probenkörper (Dimension: 2 x 40 x 50 mm) mit einem Baumwolltupfer satt aufgetragen. Die so präparierten Probekörper sowie die unbehandelten Referenz-Probekörper werden dann einer 24 bzw. 72 stündigen Lagerung im Klimaschrank bei 65°C und einer relativen Feuchte von 90% unterworfen. Nach beendeter Lagerung werden die Probekörper auf 23°C temperiert und dann unter fliessendem, handwarmen Wasser mit einem mit wässriger Seifenlösung versehenen Schwämmchen oberflächlich gereinigt, bis die Probenoberfläche frei ist von anhaftenden Rückständen des Anfärbemediums. Die Referenz-Farbplättchen ohne Anfärbemedium werden ebenfalls dem Reinigungsschritt unterworfen. Nach Reinigung der Referenz- und Test-Plättchen werden die L*,a*,b*-Werte wie oben beschrieben bestimmt und die ΔL*- und ΔE-Werte errechnet.

Bevorzugt betrifft die vorliegende Erfindung einen Artikel bzw. Formkörper, respektive Formteile, welche wenigstens teilweise aus derartigen Polyamid-Formmassen bestehen, hergestellt unter Verwendung einer Polyamid-Formmasse wie oben und auch weiter unten angegeben, insbesondere bevorzugt in Form oder als Teil eines elektrischen oder elektronischen Bauteils, eines Gehäuses oder eines Gehäusebestandteils.

In einer bevorzugten Ausführungsform beinhaltet die vorliegende Erfindung Artikel, insbesondere Gehäuse oder Gehäuseteile, für tragbare elektronische Geräte mit verbesserter Anfärberesistenz. Mit "tragbar" ist gemeint, dass die elektronischen Geräte so gestaltet sind, damit sie bequem transportiert und an verschiedenen Orten genutzt werden können. Bei den tragbaren elektronischen Geräten handelt es sich beispielsweise um Mobiltelefone, Smartphones, Organizer, Laptop Computer, Notebook Computer, Tablet Computer, Radios, Kameras, Uhren, Rechner, Abspielgeräte für Musik oder Video, Navigationsgeräte, GPS Geräte, elektronische Bilderrahmen, externe Festplatten und andere elektronische Speichermedien usw. Mit dem Begriff Gehäuse oder Gehäuseteil ist das ganze Spektrum von Gehäuseteilen, wie z.B. Abdeckung, Abdeckplatte, Abdeckhaube oder Deckel, Rahmen oder tragende Gehäuseteile, wie z.B. Backbone gemeint, insbesondere Back Cover, Front Cover, Antennengehäuse, Rahmen, Backbone eines Mobiltelefons, Smartphones oder Computers, wobei unter Backbone ein Strukturbauteil zu verstehen ist, auf das weitere elektronische Bauteile wie z.B. Batterieanschluss, Antenne, Bildschirm, Konnektoren, Prozessoren, Keypads, Keyboards und andere elektronische Komponenten montiert werden. Das Backbone kann dabei eine innere Komponente oder eine von aussen teilweise sichtbare Struktur darstellen. Die als Abdeckung eingesetzten Gehäuseteile haben u.a. die Funktion innere Bauteile und die elektronischen Komponenten vor Verschmutzung, Krafteinflüssen (z.B. Schlag durch Herunterfallen) oder Beschädigung durch Umwelteinflüsse, wie z.B. Staub, Flüssigkeiten, Strahlung oder Gasen zu schützen. Darüber hinaus können die Gehäuse oder Gehäuseteile auch als Strukturbauteil fungieren und somit dem Gerät Festigkeit verleihen. Vorzugsweise ist die Verwendung ausgerichtet auf Bauteile oder Bereiche davon, die bei der bestimmungsgemässen Benutzung unmittelbar und ohne weitere darüber liegende Schicht an der Oberfläche liegen und damit der Verschmutzung ausgesetzt sind. So kommen auch Verwendungen als Beschichtungen von Gehäuseteilen in Frage.

In einer bevorzugten Ausführungsform ist unter Gehäuse ein Gehäuse eines Mobiltelefons oder Smartphones zu verstehen, insbesondere Back Cover, Front Cover, Antennengehäuse, Rahmen, Backbone eines Mobiltelefons. Dabei kann das Gehäuse aus einem oder mehreren Teilen bestehen. Die erfindungsgemässen Artikel, insbesondere die Gehäuse für tragbare elektronische Geräte können durch verschiedene thermoplastische Verarbeitungsprozesse, insbesondere durch Spritzguss oder Extrusion, aus den vorgeschlagenen Formmassen hergestellt werden. Bei den Artikeln handelt es sich bevorzugtermassen um einen im Spritzguss- oder Extrusionsprozess geformten Gegenstand, oder einen beschichteten Gegenstand.

Im weiteren Sinne umfasst die Erfindung aber auch Artikel bzw. Formteile, insbesondere Gehäuse oder Gehäuseteile, von Haushaltsgeräten und Haushaltsmaschinen, Geräte und Apparate für die Telekommunikation und Unterhaltungselektronik, Innen und Außenteile im Automobilsektor und im Bereich von anderen Transportmitteln, Innen und Außenteile, vorzugsweise mit tragender oder mechanischer Funktion im Bereich Elektro, Möbel, Sport, Maschinenbau, Sanitär und Hygiene, Medizin, Energie- und Antriebstechnik. Darüber hinaus umfasst die Erfindung auch Garne, Fasern, Bikomponentenfasern, Stapelfasern (bevorzugt gekräuselt und/oder texturiert und/oder geschnitten auf eine Länge von 30 - 140 mm), Filamente und Monofile, hergestellt aus den erfindungsgemässen Formmassen mittels bekannten Spinnverfahren (Schmelzespinnen, Nassspinnen). Insbesondere sind dabei bevorzugt umfasst flammhemmend ausgerüstete Garne, Fasern, Stapelfasern, Bikomponentenfasern, Filamente oder Monofilamente für die Herstellung von textilen Geweben, wie z.B. Sitzbezügen, Teppichen, Vorhängen oder Gardinen, für den Einsatz in öffentlichen Gebäuden und in Restaurants oder in mobilen Verkehrsmitteln, insbesondere in Flugzeugen, Zügen und Kraftfahrzeugen.

Die **Komponente (A)** der Formmasse enthält wenigstens 50 Gew.-% mindestens eines Polyamids auf Basis von cycloaliphatischen Diaminen (A1) und bis zu 50 Gew.-% eines teilaromatischen Polyamids (A2).

Die **Komponente (A1)** enthält oder besteht bevorzugt aus einem Polyamid, welches aus cycloaliphatischen Diaminen und weiteren aliphatischen, cycloaliphatischen oder aromatischen Monomeren aufgebaut sein kann. Namentlich enthält oder besteht Komponente (A1) aus amorphen oder mikrokristallinen Polyamiden auf Basis cycloaliphatischer Diamine, die eine Glasübergangstemperatur von wenigstens 100°C, bevorzugt von wenigstens 120 oder 130°C und besonders bevorzugt von wenigstens 140 oder 150°C, dabei aber bevorzugt von nicht mehr als 220°C oder nicht mehr als 200°C besitzen. Dabei sind sowohl die amorphen als auch die mikrokristallinen Polyamide transparent im für das menschliche Auge sichtbaren Wellenlängenbereich, insbesondere solange sie (noch) nicht mit Pigmenten versetzt sind. Transparent bedeutet hierbei, dass Formteile aus den Polyamiden A2 allein eine hohe Lichttransmission (LT) von wenigstens 85, bevorzugt wenigstens 88% und insbesondere von mehr als 90% aufweisen. Der Wert der Lichttransmission, welche als Mass für die Transparenz verwendet wird, ist dabei im Rahmen der vorliegenden Anmeldung stets als bestimmt nach der Methode ASTM D1003 (Lichtart CIE-C) zu verstehen. Die Messung der Lichttransmission wurde dabei in den unten angeführten Experimenten auf einem Gerät mit dem Namen Haze Guard Plus der Firma BYK Gardner (DE) an Rundplatten 70 x 2mm oder Platten der Dimension 60 x 60 x 2mm durchgeführt. Der Transmissionswert wird für den sichtbaren Wellenlängenbereich definiert nach CIE-C d. h. mit wesentlichen Intensitäten ca. zwischen 400 und 770nm, angegeben. Die Rundplatten 70 x 2mm werden z. B. dafür auf einer Arburg Spritzgussmaschine im polierten Werkzeug hergestellt, wobei die Zylindertemperatur zwischen 200°C und 340°C und die Werkzeugtemperatur zwischen 20°C und 140°C liegt. Die amorphen Polyamide haben keine messbare oder nur sehr geringe Schmelzwärmen (Schmelzenthalpie) von höchstens 4 J/g, bevorzugt von höchstens 2 J/g (bestimmt gemäss ISO 11357-11-2 an Granulat, Differential Scanning Calorimetry (DSC) mit einer Aufheizrate von 20 °C/min). Die erfindungsgemässen mikrokristallinen Polyamide, haben kleine Kristallite, die das sichtbare Licht im wesentlichen nicht streuen, und haben moderate Schmelzwärmen im Bereich von 4 - 25 J/g, bevorzugt von 8 - 22 J/g (bestimmt gemäss ISO 11357-11-2 an Granulat, Differential Scanning Calorimetry (DSC) mit einer Aufheizrate von 20 °C/min).

Die Konzentration des cycloaliphatischen Diamins enthalten in Komponente (A1) beträgt bevorzugt wenigstens 20 Mol-%, insbesondere wenigstens 40 Mol-% und besonders bevorzugt wenigstens 50 oder 60 Mol-%, bezogen auf die Summe aller in (A1) enthaltenen Diaminen. Besonders bevorzugt wird eine Konzentration der cycloaliphatischen Diamine im Bereich von 60 bis 100 Mol-%, bezogen auf die Summe aller Diamine von Komponente (A1).

In Bezug auf Komponente (A1) geeignete cycloaliphatische Diamine sind solche mit 6 bis 24 Kohlenstoffatomen, wie z.B. Bis-(4-amino-3-methyl-cyclohexyl)-methan (MACM), Bis-(4-amino-cyclohexyl)-methan (PACM), Bis-(4-Amino-3-ethyl-cyclohexyl)-methan (EACM), Bis-(4-Amino-3,5-dimethyl-cyclohexyl)-methan (TMDC), 2,6-Norbomandiamin oder 2,6-Bis-(aminomethyl)-norbornan oder 1,3-Diaminocyclohexan, 1,4-Diaminocyclohexandiamin, Isophorondiamin, 1,3-Bis-(aminomethyl)cyclohexan, 1,4-Bis-(aminomethyl)cyclohexan, 2,2-(4,4'-Diaminodicyclohexyl)propan (PACP) oder Mischungen davon. Insbesondere wird alkylsubstituiertes Bis-(aminocyclohexyl)methan oder Bis-(aminocyclohexyl)propan bevorzugt. Als Alkylsubstituenten werden lineare und/oder verzweigte C1-C6, bevorzugt C1-C4 Alkylgruppen bevorzugt, so insbesondere Methyl-, Ethyl-, Propyl-, Isopropyl- oder Butyl-Gruppen, insbesondere bevorzugt sind Methylgruppen. In einer besonders bevorzugten Ausführungsform werden als alkylsubstituiertes Bis-(aminocyclohexyl)methan das Bis-(4-amino-3-methyl-cyclohexyl)-methan (MACM) und das Bis-(4-Amino-3,5-dimethyl-cyclohexyl)-methan (TMDC) eingesetzt. Besonders bevorzugt werden die cycloaliphatischen Diamine PACM, MACM und TMDC.

Neben den cycloaliphatischen Diaminen können auch, in beschränktem Umfang, andere aliphatische und aromatische Diamine zum Aufbau der Polyamide (A1) verwendet werden, wie z.B. 1,4-Butandiamin, 1,5-Pentandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin, 1,14-Tetradecandiamin, m-Xylylendiamin und p-Xylylendiamin. Bevorzugt werden geradkettige aliphatische Diamine mit 6 -10 Kohlenstoffatomen, insbesondere 1,6-Hexandiamin. Diese anderen Diamine innerhalb der Komponente (A1) machen aber nicht mehr als 80 Mol-% der Gesamtheit der Diamine der Komponente (A1) aus, vorzugsweise machen sie nicht mehr als 60 Mol-%, insbesondere bevorzugt nicht mehr als 40 Mol-% der Gesamtheit der Diamine der Komponente (A1) aus. Insbesondere bevorzugt ist die Komponente (A1) im Wesentlichen frei von solchen weiteren anderen Diaminen, die nicht cycloaliphatisch sind.

Für das Polyamid (A1) geeignete Dicarbonsäuren (a2) sind: Adipinsäure, Korksäure, Azelainsäure, Sebazinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure, Isophthalsäure, Terephthalsäure, Naphthalindicarbonsäure, cis- und/oder trans-Cyclohexan-1,4-dicarbonsäure und/oder cis- und/oder trans-Cyolohexan-1,3-dicarbonsäure (CHDA) und Gemische daraus. Bevorzugt werden aromatische Dicarbonsäuren und geradkettige aliphatische Dicarbonsäuren. Insbesondere bevorzugt werden die Dicarbonsäuren Terephthalsäure, Isophthalsäure, Sebazinsäure sowie Dodecandisäure. Besonders bevorzugt wird ein Polyamid (A1), dessen Anteil an Terephthalsäure höchstens 50 mol-%, bezogen auf die Summe aller Dicarbonsäuren von Komponente (A1), beträgt. Insbesondere ist es bevorzugt, wenn der Anteil der Terephthalsäure in Komponente A1 kleiner 45 mol-% ist oder keine Terephthalsäure in Komponenten (A1) enthalten ist.

Die Polyamide (A1) können als weitere Monomere auch Lactame oder Aminocarbonsäure, insbesondere $\alpha,\omega$-Aminosäuren oder Lactame mit 6 bis 12 Kohlenstoffatome enthalten, wobei beispielhaft nachfolgende Auswahl genannt sei: m-Aminobenzoesäure, p-Aminobenzoesäure, Caprolactam (CL), $\alpha,\omega$-Aminocapronsäure, $\alpha,\omega$-Aminoheptansäure, $\alpha,\omega$-Aminoctansäure, $\alpha,\omega$-Aminononansäure, $\alpha,\omega$-Aminodecansäure, $\alpha,\omega$-Aminoundecansäure (AUA), Laurinlactam (LL) und $\alpha,\omega$-Aminododecansäure (ADA). Besonderes bevorzugt sind Caprolactam, $\alpha,\omega$-Aminocapronsäure, Laurinlactam, $\alpha,\omega$-Aminoundecansäure und $\alpha,\omega$-Aminododecansäure. Der Anteil an Lactamen oder Aminosäuren in Komponente (A1) beträgt 0 bis 45 mol-%, bevorzugt 2 -40 mol-% und besonders bevorzugt 3 bis 35 mol-%, jeweils bezogen auf die Summe aller (A1) bildender Monomere, wobei die Konzentration des cycloaliphatischen Diamins bezogen auf die Diamine (a1) stets mindestens 20 mol-% beträgt.

Bevorzugte Polyamide (A1) auf Basis von cycloaliphatischen Diaminen sind MACM9, MACM10, MACM11, MACM12, MACM13, MACM14, MACM16, MACM18, PACM9, PACM10, PACM11, PACM12, PACM13, PACM14, PACM16, PACM18, TMDC9, TMDC10, TMDC11, TMDC12, TMDC13, TMDC14, TMDC15, TMDC16, TMDC17, TMDC18 oder Copolyamide, wie z.B. MACMI/12, MACMT/12, MACMI/MACMT/12, 6I/6T/MACMI/MACMT/12, 3-6T, 6I/MACMI/MACMT, 6I/PACMI/PACMT, 6I/6T/MACMI, MACMI/MACM36, 12/PACMI oder 12/MACMT, 6/PACMT, 6/IPDT oder Mischungen daraus MACM9-18/PACM9-18, MACM9-18/TMDC9-18, TMDC9-18/PACM9-18 insbesondere MACM10/PACM10, MACM12/PACM12 und MACM14/PACM14 und Mischungen davon.

Komponente (A2) enthält oder besteht aus teilaromatischen Polyamiden auf Basis von aromatischen Dicarbonsäuren, insbesondere Terephthalsäure, und aliphatischen Diaminen. Die teilaromatischen Polyamide können dabei eine amorphe oder teilkristalline Morphologie aufweisen. Bevorzugt werden die teilkristallinen, teilaromatischen Polyamide verwendet. Die teilkristallinen Polyamide der Komponente (A2) haben eine Schmelztemperatur von wenigstens 250°C, bevorzugt von wenigstens 260°C und insbesondere bevorzugt von wenigstens 270°C. Bevorzugt liegt die Schmelztemperatur im Bereich von 250 bis 330°C, insbesondere im Bereich von 260 bis 320°C. Die Schmelzenthalpie beträgt wenigstens 30 J/g, bevorzugt wenigstens 35 J/g und besonders bevorzugt mindestens 40 J/g.

Der Anteil der Terephthalsäure an der Gesamtmenge an Dicarbonsäuren von Komponente (A2) liegt vorzugsweise im Bereich von 50 bis 100 mol-%, bevorzugt im Bereich von 60 bis 95 mol-% und besonders bevorzugt im Bereich von 65 bis 90 mol-%.

Als Diamine für Komponente (A2) kommen z.B. folgende Monomere in Frage: 1,4-Butandiamin, 1,5-Pentandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin, 1,14-Tetradecandiamin, m-Xylylendiamin und p-Xylylendiamin, wobei 1,6-Hexandiamin, 1,10-Decandiamin und 1,12-Dodecandiamin bevorzugt werden.

Die Polyamide (A2) können, bevorzugt neben Terephthalsäure, noch folgende Dicarbonsäuren enthalten: Adipinsäure, Korksäure, Azelainsäure, Sebazinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure, Isophthalsäure, Naphthalindicarbonsäure, cis- und/oder trans-Cyclohexan-1,4-dicarbonsäure und/oder cis- und/oder trans-Cyclohexan-1,3-dicarbonsäure (CHDA) und Gemische daraus. Bevorzugt werden Adipinsäure, Isophthalsäure, Sebazinsäure und Dodecandisäure.

Weiterhin können die Polyamide (A2) auch Lactame oder Aminocarbonsäuren, insbesondere α,ω-Aminosäuren oder Lactame mit 6 bis 12 Kohlenstoffatomen enthalten, wobei beispielhaft nachfolgende Auswahl genannt sei: m-Aminobenzoesäure, p-Aminobenzoesäure Caprolactam (CL), α,ω-Aminocapronsäure, α,ω-Aminoheptansäure, α,ω-Aminooctansäure, α,ω-Aminononansäure, α,ω-Aminodecansäure, α,ω-Aminoundecansäure (AUA), Laurinlactam (LL) und α,ω-Aminododecansäure (ADA). Besonders bevorzugt sind Caprolactam, α,ω-Aminocapronsäure, Laurinlactam, α,ω-Aminoundecansäure und α,ω-Aminododecansäure.

Die teilaromatischen Polyamide (A2) beruhen vorzugsweise entweder auf aromatischen Dicarbonsäuren mit 8 bis 18, bevorzugt 8 bis 14 Kohlenstoffatomen oder auf aromatische Struktureinheiten aufweisenden Diaminen, wie z.B. PXDA und/oder MXDA. Bevorzugte aromatische Dicarbonsäuren sind Terephthalsäure, Naphthalindicarbonsäure und Isophthalsäure. Bevorzugte teilaromatische Polyamide beruhen auf den folgenden Polyamidsystemen: 4T, 5T, DT, 6T, 9T, MT, 10T, 12T, 4I, 5I, DI, 6I, 9I, MI, 10I, 12I (D steht für 2-Methylpentandiamin und M steht für 2-Methyloctandiamin). Diese können, sofern es die Verarbeitungstemperatur zulässt, als Homopolyamide sowie als binäre, ternäre oder quaternäre Copolyamide miteinander kombiniert werden. Des Weiteren können auch aliphatische Polyamidsysteme, wie z.B. PA46, PA6, PA66, PA11, PA12, PA1212, PA1010, PA1012, PA610, PA612, PA69, PA810 hinzukombiniert werden. Bevorzugte teilaromatische Polyamide sind: 6T/6I, 6T/10T, 10T/612, 11/10T, 12/10T, 10T/1010, 10I/10T, 10T/1012, 9MT, 12T.

Bei den Polyamiden (A2) sind die teilkristallinen Copolyamide 6T/6I, 10T/6T, 10T/612 sowie MXD6, MXD10, MXD6/MXDI, PXD10, MXD10/PXD10 besonders bevorzugt.

Die amorphen teilaromatischen Polyamide (A2) beruhen bevorzugt auf geradkettigen und/oder verzweigten aliphatischen Diaminen und aromatischen Dicarbonsäuren und enthalten vorzugsweise weniger als 20 Mol-% cycloaliphatische Diamine und sind bevorzugt im Wesentlichen frei von cycloaliphatischen Diaminen. Hinsichtlich den amorphen teilaromatischen Polyamiden (A2) sind die Systeme 6T/6I oder 10T/10I oder 3-6T (3-6 = 2,2,4- bzw. 2,4,4-Trimethylhexandiamin) besonders bevorzugt. Die Systeme 6T/6I oder 10T/10I haben einem Anteil von weniger als 50 Mol-% 6T- bzw. 10T-Einheiten, wobei ein Zusammensetzungsbereich 6T:6I bzw. 10T/10I von 20:80 bis 45:55, insbesondere 25:75 bis 40:60 bevorzugt wird. Insbesondere wird bevorzugt, wenn Komponente A höchstens 20 Gew.-%, bevorzugt höchstens 10 Gew.-% und besonders bevorzugt kein amorphes teilaromatisches Polyamid (A1) enthält.

In einer bevorzugten Ausführungsform werden die Polyamide (A2) aus 55 bis 100 mol-% Terephthalsäure, 0 bis 45 mol-% aliphatischen Dicarbonsäuren mit 6 bis 12 Kohlenstoffatomen, 55 bis 95 mol-% linearen aliphatischen Diaminen mit 9-12 C-Atomen und 5 bis 45 mol-% aliphatischen Diaminen mit 4 bis 8 C-Atomen gebildet. Dabei werden die Diamine mit 10 und 12 Kohlenstoffatomen, also 1,10-Decandiamin und 1,12-Dodecandiamin, besonders bevorzugt. Unter den Diaminen mit 4-8 C-Atomen wird 1,6-Hexandiamin bevorzugt. Beispiele für solche bevorzugten Polyamide sind: 10T/612 (80:20) und 10T/6T (85:15).

Gemäss einer weiteren bevorzugten Ausführungsform ist die Komponente (A2) ein teilaromatisches, teilkristallines Copolyamid aufgebaut aus 72.0-98.3 Gew.-% Terephthalsäure (TPS), 28.0-1.7 Gew.-% Isophthalsäure (IPS), 51.0-80.0 Gew.-% 1,6-Hexandiamin (HMDA) und 20.0-49.0 Gew.-% C9-C12 Diamin, wobei es sich beim C9-C12 Diamin vorzugsweise um ein Diamin ausgewählt aus der Gruppe: 1,9-Nonandiamin, Methyl-1,8-Octandiamin, 1,10-Decandiamin, 1,11-Undecandiamin, 1,12-Dodecandiamin, oder eine Mischung derartiger Diamine handelt, wobei 1,10-Decandiamin und 1,12-Dodecandiamin bevorzugt sind, und besonders 1,10-Decandiamin allein bevorzugt ist. Damit ist also ein Polyamidsystem PA 10T/10I/6T/6I bevorzugt, wobei obige Konzentrationen gelten.

Bezüglich einer Polymermischung (A) enthaltend die Polyamidkomponenten A1 und A2, werden folgende Zusammensetzungen bevorzugt:

(A1): MACM12 oder MACMI/12 oder TMDC12 oder MACMT/MACMI/12;
(A2): 6T/6I, wobei das Mol-Verhältnis im Bereich von 60:40 bis 80:20 liegt oder insbesondere im Bereich von 65:35 bis 75:25 beträgt, wobei das Verhältnis 70:30 besonders bevorzugt ist.
(A1): MACM12 oder MACMI/12 oder TMDC12 oder MACMT/MACMI/12;
(A2): 10T/6T, 12T/6T, 10T/11, 10T/12, 10T/1010, 10T/1012, 10T/106, 10T/126, oder 10T/612, wobei das Mol-Verhältnis im Bereich von 60:40 bis 95:5 liegt oder insbesondere im Bereich von 70:30 bis 90:10 liegt.

Dabei ist der Anteil (A1) 50 - 95 Gew.-%, bevorzugt 60 - 90 Gew.-%, besonders bevorzugt 70 - 90 Gew.-%, bezogen auf die Mischung (A).

Die erfindungsgemäß eingesetzte Matrix der Polyamidformmassen basiert, wie oben beschrieben wurde, bevorzugt auf amorphen Polyamiden oder auf Mischungen aus amorphen Polyamiden und teilkristallinen, teilaromatischen Polyamiden. Diese Matrix kann weiterhin bevorzugtermassen Schlagzähmodifier oder weitere, von Komponente A verschiedene Polymere enthalten. Besonders bevorzugt werden Formmassen, deren Matrices bezüglich der Polymere nur aus den Komponenten A1 und A2 bestehen.

Die Polyamide (A1) oder (A2) haben vorzugsweise eine Lösungsviskosität $\eta_{rel}$, gemessen in m-Kresol (0,5 Gew.-%, 20°C) im Bereich von 1,4 bis 3.0, bevorzugt im Bereich von 1,5 bis 2.7, insbesondere im Bereich von 1,5 bis 2.4.

Zusammenfassend lässt sich festhalten, dass es sich bevorzugtermassen bei der Komponente (A1) um ein Homo-Polyamid und/oder Copolyamid aufgebaut aus cycloaliphatischen Diaminen und weiteren aliphatischen oder aromatischen Monomeren handelt, bevorzugt um eine Mischung aus einem amorphen Polyamid auf Basis cycloaliphatischer Diamine und einem amorphen, teilaromatischen Polyamid (A2) und/oder einem teilkristallinen, teilaromatischen Polyamid (A2), wobei bevorzugtermassen die Polyamide der Komponente (A1) ausgewählt sind aus folgender Gruppe: MACM9, MACM10, MACM11, MACM12, MACM13, MACM14, MACM16, MACM18, PACM9, PACM10, PACM11, PACM12, PACM13, PACM14, PACM16, PACM18, TMDC9, TMDC10, TMDC11, TMDC12, TMDC13, TMDC14, TMDC15, TMDC16, TMDC18 oder Copolyamiden davon, wie z.B. MACM10/PACM10, MACM12/PACM12, MACM14/PACM14, PACM10/TMDC10, PACM12/TMDC12, PACM14/TMDC14 oder Copolyamide MACMI/12, MACMT/12, 6I/6T/MACMI/MACMT/12, 6I/MACMI/MACMT, 6I/PACMI/PACMT, 6I/6T/MACMI, MACMI/MACM36, 12/PACMI, 12/MACMT, 6/PACMT, 6/IPDT, MACM10/TMDC10, MACM12/TMDC12, sowie Mischungen respektive Blends davon. Besonderes bevorzugt sind MACM10, MACM12, MACM14, PACM10, PACM12, PACM14, TMDC10, TMDC12, TMDC14, MACMI/12, MACMI/MACMT/12 und 6T/6I/MACMT/MACMI/12.

Die Polyamide A2 sind bevorzugtermassen ausgewählt aus folgender Gruppe: 6T/6I, 6T/10T, 6T/10T/10I, 6T/12, 11/10T, 12/10T, 10T/1010, 10T/612, 10I/10T, 10T/1012, 9MT, 12T sowie Mischungen respektive Blends davon.

Die Formmasse enthält 10 - 65 Gew.-%, insbesondere bevorzugt 20 - 60 Gew.-% an Füll-und Verstärkungsstoffen **(Komponente B)**. Weiterhin wird bevorzugt, wenn das Verhältnis der faserförmigen Zuschlagsstoffe (B1) zu den partikulären Zuschlagsstoffen (B2) im Bereich von 10:1 bis 1:10 oder im Bereich von 5:1 bis 1:5 liegt.

Die Komponente (B1) ist ausgewählt aus der Gruppe bestehend aus: Glasfasern. Die Fasern der Komponente (B1) können mit kreisförmiger oder nicht-kreisförmiger Querschnittsfläche vorliegen.

Bevorzugt ist Komponente (B1) eine Glasfaser, die im Wesentlichen aus den Komponenten Siliciumdioxid, Calciumoxid und Aluminiumoxid aufgebaut ist oder besteht und das Gewichtsverhältnis $SiO_2/(CaO+MgO)$ kleiner 2.7, bevorzugt kleiner 2.5 und insbesondere zwischen 2.1 und 2.4 ist. Insbesondere handelt es sich bei Komponente B1 um eine E-Glasfaser gemäss ASTM D578-00.

Erfindungsgemäss kann es sich bei der Glasfaser (Komponente B1) auch um eine hochfeste Glasfaser handeln, die vorzugsweise auf dem ternären System Siliciumdioxid-Aluminiumoxid-Magnesiumoxid oder auf dem quaternären System Siliciumdioxid-Aluminiumoxid-Magnesiumoxid-Calciumoxid beruht, wobei eine Zusammensetzung von 58-70 Gew.-% Siliciumdioxid ($SiO_2$), 15-30 Gew.-% Aluminiumoxid ($Al_2O_3$), 5-15 Gew.-% Magnesiumoxid (MgO), 0-10 Gew.-

% Calciumoxid (CaO) und 0-2 Gew.-% weitere Oxide, wie z.B. Zirkoniumdioxid ($ZrO_2$), Boroxid ($B_2O_3$), Titandioxid ($TiO_2$) oder Lithiumoxid ($Li_2O$) bevorzugt wird. Die hochfeste Glasfaser besitzt bevorzugtermassen eine Zugfestigkeit von grösser oder gleich 4000 MPa, und/oder eine Reissdehnung von mindestens 5% und einen Zug-E-Modul von grösser 80 GPa. Konkrete Beispiele für diese hochfesten Glasfasern der Komponente (B1) sind S-Glasfasern von Owens Corning mit 910- oder 995-Schlichte, T-Glasfasern von Nittobo, HiPertex von 3B, HS4-Glasfasern von Sinoma Jinjing Fiberglass, R-Glasfasern von Vetrotex sowie S-1- und S-2-Glasfasern von AGY.

Die Glasfasern der Komponente (B1) können in Form von Kurzfasern, bevorzugt in Form von Schnittglas mit einer Länge im Bereich von 0.2-20 mm, oder in Form von Endlosfasern vorliegen. Somit enthalten die Formmassen 0 bis 70 Gew.-%, bevorzugt 10 bis 65 Gew.-% und besonders bevorzugt 20 bis 60 Gew.-% einer Glasfaser (B1), die in Form von sogenannten Kurzfasern (z.B. Schnittglas mit einer Länge von 0.2-20 mm) oder Endlosfasern (Rovings) verwendet wird.

Die erfindungsgemässen Glasfasern der Komponente (B1) haben bevorzugt eine kreisförmige oder nicht-kreisförmige Querschnittsfläche.

Glasfasern mit kreisförmigem Querschnitt, also runde Glasfasern, haben typischerweise einen Durchmesser im Bereich von 5-20 $\mu$m, bevorzugt im Bereich von 6-17 $\mu$m und besonders bevorzugt im Bereich von 6-13 $\mu$m. Sie werden bevorzugt als Kurzglasfaser (Schnittglas mit einer Länge von 0.2 bis 20 mm, bevorzugt 2-12 mm) eingesetzt.

Bei den flachen Glasfasern der Komponente (B1), also Glasfasern mit nicht-kreisförmiger Querschnittsfläche, werden solche mit einem Abmessungsverhältnis von der Hauptquerschnittsachse zur senkrecht darauf stehender Nebenquerschnittsachse von mehr als 2 bevorzugt von 2 bis 8, insbesondere von 2 bis 5 bevorzugt eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf. Ein weiteres kennzeichnendes Merkmal der eingesetzten flachen Glasfasern besteht darin, dass die Länge der Hauptquerschnittsachse bevorzugt im Bereich von 6 bis 40 $\mu$m, insbesondere im Bereich von 15 bis 30 $\mu$m und die Länge der Nebenquerschnittsachse im Bereich von 3 bis 20 $\mu$m, insbesondere im Bereich von 4 bis 10 $\mu$m liegt. Dabei weisen die flachen Glasfasern eine möglichst hohe Packungsdichte auf, d.h. die Querschnittsfläche der Glasfaser füllt ein gedachtes, den Glasfaserquerschnitt möglichst exakt umgebendes Rechteck zu mindestens 70%, bevorzugt mindestens 80% und insbesondere bevorzugt zu mindestens 85% aus. Zur Verstärkung der erfindungsgemässen Formmassen können auch Mischungen von Glasfasern mit kreisförmigem und nicht-kreisförmigem Querschnitt verwendet werden, wobei der Anteil an flachen Glasfasern bevorzugtermassen überwiegt, d.h. mehr als 50 Gew.-% der Gesamtmasse der Fasern ausmacht.

Die erfindungsgemässen Glasfasern sind bevorzugtermassen mit einer für den jeweiligen Thermoplasten, insbesondere für Polyamid geeigneten Schlichte, beispielsweise enthaltend einen Haftvermittler auf Basis einer Amino- oder Epoxysilanverbindung, versehen.

Die gemäss einer weiteren bevorzugten Ausführungsform innerhalb der Komponente (B1) als Roving eingesetzten hochfesten Glasfasern weisen bevorzugt einen Durchmesser von 8 bis 20 $\mu$m, bevorzugt von 12 bis 18 $\mu$m auf, wobei der Querschnitt der Glasfasern rund, oval, elliptisch, elliptisch mit Einschnürung(en) versehen, polygonal, rechteckig oder nahezu rechteckig sein kann. Besonders bevorzugt werden sogenannte flache Glasfasern mit einem Verhältnis der Querschnittsachsen von 2 bis 5. Diese Endlosfasern, insbesondere bevorzugt innerhalb der Komponente (B1), werden in die erfindungsgemässen Polyamidformmassen durch bekannte Verfahren zur Herstellung von langfaserverstärktem Stäbchengranulat (Faserlänge und Granulatlänge sind identisch) eingearbeitet, insbesondere durch Pultrusionsverfahren, bei denen der endlose Faserstrang (Roving) mit der Polymerschmelze vollständig durchtränkt und anschliessend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden. Zur Verstärkung der erfindungsgemässen Formmassen können auch endlose Fasern (Langglasfasern) mit geschnittenen Fasern (Kurzglasfasern) kombiniert werden.

Die **partikulären Zuschlagsstoffe der Komponente (B2)** sind ausgewählt aus der Gruppe bestehend aus: Talk, Glimmer, Silikaten, Quarz, Wollastonit, Kaolin, Kreide, gemahlenem oder gefälltem Calciumcarbonat, Kalk, Feldspat, Bariumsulfat, Zinkoxid, Zinksulfid, Lithopone und Titandioxid (Rutil, Anatas), und Mischungen hiervon. Die Füllstoffe können auch oberflächenbehandelt sein.

Erfindungsgemäss verfügt die Komponente (B2) über eine mittlere Partikelgrösse (D50) im Bereich von 0.1-40 $\mu$m, bevorzugt im Bereich von 0.2-20 $\mu$m, insbesondere im Bereich von 0.3-10 $\mu$m. Bevorzugt wird eine Form der partikulären Füllstoffe, bei denen die Aspektverhältnisse L/bl und L/b2 beide höchstens 10, insbesondere höchstens 5 sind, wobei die Aspektverhältnisse durch die Quotienten aus grösster Länge L des Teilchens zu dessen mittleren Breite bl oder b2 beschrieben werden. Dabei liegen bl und b2, die senkrecht zueinander angeordnet sind, in einer zur Länge L senkrechten Ebene.

Des weiteren bevorzugtermassen verfügt die Komponente (B2) über einen von null verschiedenen Absorptionskoeffizienten für UV-, VIS-oder IR-Strahlung, insbesondere für Laserstrahlung, bevorzugt bei einer Wellenlänge im Bereich von 1064 nm, bevorzugtermassen mit einer Absorptionsfähigkeit im sichtbaren und/oder infraroten Strahlungsbereich mit einem Absorptionskoeffizienten von wenigstens 0.05, bevorzugt wenigstens 0.1, und insbesondere bevorzugt wenigstens 0.2.

Besonders bevorzugt werden als Komponente (B2) anorganische Weisspigmente verwendet. Insbesondere ist bevorzugt, dass Komponente (B2) ausschliesslich aus diesen Weisspigmenten gebildet wird. In diesem Fall ist oder besteht Komponente (B2) ausschliesslich aus den anorganischen Weisspigmenten, ausgewählt aus der Gruppe Bariumsulfat, Zinkoxid, Zinksulfid, Lithopone und Titandioxid (Rutil, Anatas), wobei die, Weisspigmente bevorzugtermassen über eine mittlere Partikelgrösse (D50) im Bereich von 0.1-40 $\mu$m, bevorzugt im Bereich von 0.1-20 $\mu$m, insbesondere im Bereich von 0.1-10 $\mu$m verfügen.

Der Polyamidformmasse können weitere von Komponente (A) verschiedene Polymere, insbesondere Schlagzähmodifier, in einer Menge von 0 bis 30 Gew.-% zugesetzt werden. Die von (A) verschiedenen Polymere **(Komponente C),** die in Form einer Mischung mit dem Polyamidbestandteil (A) ebenfalls vorhanden sein kann, ist vorzugsweise ausgewählt aus der Gruppe bestehend aus: Polycarbonat, Polystyrol, Polymethylmethacrylat, Acrylnitril-Butadien-Styrol-Copolymerisat, Acrylnitril-Styrol-Copolymer, Polyolefin, Polyoxymethylen, Polyester, insbesondere Polyethylenterephthalat, Polybutylenterephthalat, Polysulfon (insbesondere des Typs PSU, PESU, PPSU), Polyphenylenether, Polyphenylensulfid, Polyphenylenoxid, Flüssigkristalline Polymere, Polyetherketon, Polyetheretherketon, Polyimid, aliphatische Polyamide, Polyamidimid, Polyesterimid, Polyetheramid, Polyesteramid, Polyetheresteramid, Polyurethan (insbesondere des Typs TPU, PUR), Polysiloxan, Polyacrylat, Polymethacrylat sowie Mischungen oder Copolymere auf Basis solcher Systeme.

In einer bevorzugten Ausführungsform können der Formmasse bis zu 30 Gew.-% aliphatische Polyamide beigemischt sein im Rahmen der Komponente (C). Bevorzugtermassen beträgt der Gehalt an aliphatischen Polyamiden in Bezug zur gesamten Formmasse höchstens 20, insbesondere höchstens 10 Gew.-%, wobei die aliphatischen Polyamide bevorzugt in einem Bereich von 2-10 Gew.-% in der Formmasse enthalten sind. Insbesondere wird bevorzugt, wenn die Formmassen frei von aliphatischen Polyamiden sind. Als aliphatische Polyamide werden bevorzugt Polyamid 46, Polyamid 6, Polyamid 66, Polyamid 11, Polyamid 12, Polyamid 1212, Polyamid 1010, Polyamid 1011, Polyamid 1012, Polyamid 1112, Polyamid 1211, Polyamid 610, Polyamid 612, Polyamid 69, Polyamid 810 oder deren Gemische, Blends oder Legierungen.

In einer weiteren Ausführungsform enthält die erfindungsgemässe Formmasse als Komponente (C) bis zu 30 Gew.-% bezogen auf die gesamte Formmasse eines oder mehrerer Schlagzähmodifikatoren (SZM). Bevorzugt wird eine SZM-Konzentration im Bereich zwischen 5 und 30 Gew.-%, insbesondere von 7-25 Gew.-%. Der Schlagzähmodifier kann ein Naturkautschuk, Polybutadien, Polyisopren, Polyisobutylen, ein Mischpolymerisat des Butadiens und/oder Isoprens mit Styrol oder Styrolderivaten und anderen Comonomeren, ein hydriertes Mischpolymerisat und oder ein Mischpolymerisat, das durch Pfropfen oder Copolymerisation mit Säureanhydriden, (Meth)acrylsäure und deren Ester entstanden ist, sein. Der Schlagzähmodifier (C) kann auch ein Pfropfkautschuk mit einem vernetzten elastomeren Kern, der aus Butadien, Isopren oder Alkylacrylaten besteht und eine Pfropfhülle aus Polystyrol hat, ein unpolares oder polares Olefinhomo- und copolymeres wie Ethylen-Propylen-, Ethylen-Propylen-Dien- und Ethylen-Octen- oder Ethylen-Vinylacteat-Kautschuk oder ein unpolares oder polares Olefin-Homopolymeres und -Copolymeres, das durch Pfropfen oder Copolymerisation mit Säureanhydriden, (Meth)acrylsäure und deren Ester entstanden ist, sein. Der Schlagzähmodifier (C) kann auch ein carbonsäure- funktionalisiertes Copolymeres wie Poly(ethen-co-(meth)acrylsäure) oder Poly(ethen-co-1-olefin-co-(meth)acrylsäure) sein, wobei das 1-Olefin ein Alken oder ein ungesättigter (Meth)acrylsäureester mit mehr als 4 Atomen sein kann, einschliesslich solchen Copolymeren, in denen die Säuregruppen teilweise mit Metallionen neutralisiert sind.

Als Beispiele der auf Styrol beruhenden Blockcopolymere seien Styrol-(ethylen-butylen)-Zweiblock und Styrol-(ethylen-butylen)-styrol-Dreiblock-Copolymere genannt.

Gemäss einer weiteren bevorzugten Ausführungsform sind die erfindungsgemässen Formmassen dadurch gekennzeichnet, dass die Komponente (C) ein Polyolefinhomopolymeres oder ein Ethylen-$\alpha$-Olefin-Copolymeres, insbesondere bevorzugt ein EP- und/oder EPDM-Elastomer (Ethylen-Propylen-Kautschuk respektive Ethylen-Propylen-Dien-Kautschuk), enthält. So kann es sich beispielsweise um ein Elastomer handeln, welches basiert auf einem Ethylen-C3-12-$\alpha$-Olefin-Copolymer mit 20 bis 96, bevorzugt 25 bis 85 Gew.-% Ethylen, wobei es sich insbesondere bevorzugt bei dem C3-12-$\alpha$-Olefin um ein Olefin ausgewählt aus der Gruppe Propen, 1-Buten, 1-Penten, 1-Hexen, 1-Octen, 1-Decen und/oder 1-Dodecen handelt, und es sich insbesondere bevorzugt bei der Komponente (C) um Ethylen-Propylen-Kautschuk und/oder LLDPE und/oder VLDPE handelt.

Alternativ oder zusätzlich (beispielsweise in Mischung) kann (C) ein Terpolymeres auf Basis von Ethylen-C3-12-$\alpha$-Olefin mit einem unkonjugierten Dien enthalten, wobei dieses bevorzugtermassen 25 bis 85 Gew.-% Ethylen und bis maximal im Bereich von 10 Gew.-% eines unkonjugierten Diens enthält, wobei es sich insbesondere bevorzugt bei dem C3-12-$\alpha$-Olefin um ein Olefin ausgewählt aus der Gruppe Propen, 1-Buten, 1-Penten, 1-Hexen, 1-Octen, 1-Decen und/oder 1-Dodecen handelt, und/oder wobei das unkonjugierte Dien bevorzugt ausgewählt ist aus der Gruppe Bicyclo(2.2.1) heptadien, Hexadien-1.4, Dicyclopentadien und/oder insbesondere 5-Ethylidennorbornen.

In Frage als Bestandteil für die Komponente (C) kommen zudem auch Ethylen-Acrylat- oder Ethylen-Butylen-Acrylat-Copolymere.

Bevorzugtermassen verfügt die Komponente (C) über Bestandteile mit Carbonsäure- oder Carbonsäureanhydridgruppen, die durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht, wobei dafür Reagenzien ausgewählt aus der folgenden Gruppe bevorzugtermassen eingesetzt werden: Maleinsäure, Maleinsäureanhydrid, Maleinsäuremonobutylester, Fumarsäure, Aconitsäure und/oder Itaconsäureanhydrid.

Vorzugsweise werden 0.1 bis 4.0 Gew.-% eines ungesättigten Anhydrids an die Schlagzähkomponente als Bestandteil von (C) aufgepfropft oder das ungesättigte Dicarbonsäureanhydrid oder dessen Vorstufe wird zusammen mit einem weiteren ungesättigten Monomeren aufgepfropft. Generell ist der Pfropfgrad bevorzugtermassen in einem Bereich von 0.1-1.0%, insbesondere bevorzugt in einem Bereich von 0.3-0.7%. Auch möglich als Bestandteil der Komponente (C) ist eine Mischung aus einem Ethylen-Propylen-Copolymer und einem Ethylen-Butylen-Copolymer, dies mit einem Maleinsäureanhydrid-Pfropfgrad (MAH-Propfgrad) im Bereich von 0.3-0.7%. Die oben angegebenen möglichen Systeme für die Komponente können auch in Mischungen verwendet werden.

Die als Komponente (C) eingesetzten SZM schliessen damit Homopolymere oder Copolymere von Olefinen, wie z.B. Ethylen, Propylen, Buten-1, oder Copolymere von Olefinen und copolymerisierbaren Monomeren, wie Vinylacetat, (Meth)acrylsäureester und Methylhexadien, ein.

Beispiele für kristalline Olefinpolymere sind niedrig-, mittel- und hochdichte Polyethylene, Polypropylen, Polybutadien, Poly-4-methylpenten, Ethylen-Propylen-Block- oder statistische Copolymere, Ethylen-Methylhexadien-Copolymere, Propylen-Methylhexadien-Copolymere, Ethylen-Propylen-Buten-Copolymere, Ethylen-Propylen-Hexen-Copolymere, Ethylen-Propylen-Methylhexadien-Copolymere, Poly(ethylen-vinylacetat) (EVA), Poly(ethylen-ethylacrylat) (EEA), Ethylen-Octen-Copolymer, Ethylen-Buten-Copolymer, Ethylen-Hexen-Copolymer, Ethylen-Propylen-Dien-Terpolymere sowie Kombinationen der genannten Polymere.

Beispiele für kommerziell erhältliche Schlagzähmodifier, welche im Rahmen der Bestandteile der Komponente (C) eingesetzt werden können, sind: TAFMER MC201: g-MAH (-0.6 %) Blend aus 67% EP Copolymer (20 Mol-% Propylen) + 33 % EB Copolymer (15 mol-% Buten-1)); TAFMER MH5010: g-MAH (0.6 %) Ethylen-Butylen-Copolymer; TAFMER MH7010: g-MAH (0.7 %) Ethylen-Butylen-Copolymer; Mitsui. TAFMER MH7020: g-MAH (0.7 %) EP-Copolymer von Mitsui Chemicals; EXXELOR VA1801: g-MAH (0.7 %) EP-Copolymer;.EXXELOR VA1803: g-MAH (0.5-0.9 %) EP Copolymer, amorph; EXXELOR VA1810: g-MAH (0.5 %) EP-Copolymer; EXXELOR MDEX 94-1 1: g-MAH (0.7 %) EPDM, Exxon Mobile Chemical; FUSABOND MN493D: g-MAH (0.5 %) Ethylen-Octen-Copolymer; FUSABOND A EB560D (g-MAH) Ethylen-n-butyl-acrylat-copolymer; ELVALOY, DuPont; Kraton FG1901GT: g-MAH (1.7%) SEBS mit einem S zu EB Verhältnis von 30:70; Lotader AX8840: Ethylen-glycidylmethacrylat-Copolymer.

Bevorzugt wird auch ein Ionomer im Rahmen von Komponente (A2), in welchem die polymergebundenen Carboxylgruppen ganz oder teilweise durch Metallionen miteinander verbunden sind.

Besonders bevorzugt sind durch Pfropfen mit Maleinsäureanhydrid funktionalisierte Mischpolymerisate des Butadiens mit Styrol, unpolare oder polare Olefinhomo- und Copolymere, die durch Pfropfen mit Maleinsäureanhydrid entstanden sind und carbonsäurefunktionalisierte Copolymere wie Poly(ethen-co-(meth)arylsäure) oder Poly(ethen-co-1-olefin-co-(meth)acrylsäure), in denen die Säuregruppen teilweise mit Metallionen neutralisiert sind.

In einer weiteren Ausführungsform enthalten die Formmassen als **Komponente (D)** 0 - 25 Gew.-%, bevorzugt 5- 25 Gew.-%, besonders bevorzugt 8 - 22 Gew.-% Flammschutzmittel, insbesondere halogenfreie Flammschutzmittel. Bevorzugte Flammschutzmittel sind Phosphonate, Alkylphosphonate, zyklische Phosphonate und Phosphinate. Bevorzugtermassen umfasst das Flammschutzmittel dabei 60 - 100 Gew.-%, bevorzugt 70 - 98 Gew.-%, insbesondere 80 - 96 Gew.-% eines geradkettigen oder zyklischen Phosphonats, Phosphinsäuresalzes und/oder Diphosphinsäuresalzes (Komponente (D1)) sowie 0 - 40 Gew.-%, bevorzugt 2 - 30 Gew.-%, insbesondere 4 - 20 Gew.-% eines Melaminpolyphosphats oder anderen Synergisten und/oder eines Stickstoff und Phosphor enthaltenden Flammschutzmittels (Komponente (D2)), wie z.B. Melem, Melam, Melon, oder um Umsetzungsprodukte von Melamin mit Polyphosphorsäure oder um Umsetzungsprodukte von Kondensationsprodukten des Melamins mit Polyphosphorsäure. Als Metallion der Phosphinsäuresalze oder Diphosphinsäuresalze werden bevorzugt Aluminium-, Calcium- und Zink-Ionen verwendet. Derartige Flammschutzmittel sind aus dem Stand der Technik bekannt. Hierzu wird auf die DE 103 46 3261 verwiesen. Bevorzugte Synergisten (Komponente D2) sind: Bariumcarboxylat, sauerstoff-, stickstoff- oder schwefelhaltigen Metallverbindungen, insbesondere der Metalle Aluminium, Calcium, Magnesium, Barium, Natrium, Kalium und Zink. Geeignete Verbindungen sind ausgewählt aus der Gruppe der Oxide, Hydroxide, Carbonate, Silikate, Borate, Phosphate, Stannate sowie Kombinationen oder Mischungen dieser Verbindungen, wie z.B. Oxid-Hydroxide oder Oxid-Hydroxid-Carbonate. Beispiele sind Magnesiumoxid, Calciumoxid, Aluminiumoxid, Zinkoxid, Bariumcarbonat, Magnesiumhyroxid, Aluminiumhydroxid, Böhmit, Dihydrotalcit, Hydrocalumit, Calciumhydroxid, Zinnoxidhydrat, Zinkhydroxid, Zinkborat, Zinksulfid, Zinkphosphat, Natriumcarbonat, Calciumcarbonat, Calciumphosphat, Magnesiumcarbonat, basisches Zinksilikat, Zinkstannat. Auch möglich sind Systeme wie Calciumstearat, Zinkstearat, Magnesiumstearat, Kaliumpalmitat, Magnesiumbehenat. Als konkrete Beispiele für solche Flammschutzmittel seien genannt: Exolit 1230 (Clariant), Exolit 1312 (Clariant), Aflammit PLF 710 (Thor). Amgard CU (Rhodia). Natürlich können die erfindungsgemäßen thermoplastischen Polyamidformmassen weiterhin übliche und dem Fachmann allgemein bekannte Zusatzstoffe in Form der **Komponente (E)** enthalten, die vorzugsweise aus der Gruppe bestehend aus Stabilisatoren, Alterungsschutzmitteln, Antioxidantien, Antiozonantien, Lichtschutzmitteln, UV-Stabilisatoren, UV-Absorbern, UV-Blockern, anorganischen Hitzestabilisatoren, insbesondere auf Basis von Kupferhalogeniden und Alkalihalogeniden, organischen Hitzestabilisatoren, Leitfähigkeitsadditiven, Russ, optischen Aufhellern, Verarbeitungshilfsmitteln, Nukleierungsmitteln, Kristallisationsbeschleunigern, Kristallisationsverzögerern, Fliesshilfsmitteln, Gleitmitteln, Entformungsmitteln, Weichmachern, Pigmenten (verschieden von Weisspigmenten), Farbstoffen, Markierungsstoffen und Mischungen hiervon ausgewählt sind.

Weitere Ausführungsformen sind in den abhängigen Ansprüchen angegeben.

BESCHREIBUNG BEVORZUGTER AUSFÜHRUNGSFORMEN

Die Erfindung soll nachfolgend unter Verwendung von spezifischen Ausführungsbeispielen (B) beschrieben und mit den weniger leistungsfähigen Systemen nach dem Stand der Technik (VB) verglichen werden. Die in der Folge angegebenen Ausführungsbeispiele dienen zur Stützung der Erfindung und zum Nachweis der Unterschiede zum Stand der Technik, sie sollen aber nicht zur Einschränkung des allgemeinen Gegenstandes der Erfindung, wie er in den Patentansprüchen definiert ist, hinzugezogen werden.

Beispiele B1 bis B20 und Vergleichsbeispiele VB1 bis VB7

Die in den Tabellen 2 bis 5 angegebenen Komponenten werden in einem zweiwelligen Extruder der Firma Werner und Pfleiderer mit einem Schneckendurchmesser von 25 mm bei vorgegebenen Prozessparametern (siehe Tabelle 1) compoundiert, wobei die Polyamidgranulate sowie die Zusatzstoffe in die Einzugszone dosiert werden, während die Glasfaser über einen Sidefeeder 3 Gehäuseeinheiten vor der Düse in die Polymerschmelze dosiert wird. Das Temperaturprofil 1 wurde für die Beispiele VB1, VB3VB6, B1, B2, B3, B4, B5, B6, B7, B8, B9, B10, B11, B12, B13, B17, B18, und B20, das Temperaturprofil 2 für die Beispiele VB2, VB4, VB5, VB7 und B14, B15, B16 und B19 verwendet. Die Compounds zusammengefasst in Tabelle 4, bis 7 wurden als Strang aus einer Düse mit 2.5 mm Durchmesser abgezogen und nach Wasserkühlung granuliert. Das Granulat wird 24 Stunden bei 110°C im Vakuum von 30 mbar getrocknet.

Tabelle 1: Prozessparameter Compoundierung

| Parameter [Einheit] | Temperaturprofil 1 | Temperaturprofil 2 |
|---|---|---|
| Temperatur Zone 1 [°C] | 70-90 | 80-100 |
| Temperatur Zone 2 [°C] | 190-210 | 290-310 |
| Temperatur Zone 3 bis 10 [°C] | 270-290 | 320-340 |
| Temperatur Zone 11 [°C] | 270-290 | 310-330 |
| Temperatur Zone 12 [°C] | 270-290 | 310-330 |
| Temperatur Düsenkopfes [°C] | 275-295 | 320-340 |
| Schmelzetemperatur [°C] | 280-300 | 320-.340 |
| Durchsatz [kg/h] | 8-12 | 8-12 |
| Schneckendrehzahl [U/min] | 150-200 | 150-200 |

Die Compounds werden mit einer Spritzgussmaschine Arburg Allrounder 320-210-750 zu Probekörpern bei einer definierten Massetemperatur und einer definierten Werkzeugtemperatur (siehe Tabelle 2) verspritzt.

Tabelle 2: Masse- und Werkzeugtemperatur bei der Spritzgussverarbeitung

| Beispiel | Werkzeugtemperatur [°C] | Massetemperatur [°C] |
|---|---|---|
| VB1 | 40 | 250 |
| B1, B2, VB4 | 80 | 280 |
| B16, B4 | 80 | 300 |

(fortgesetzt)

| Beispiel | Werkzeugtemperatur [°C] | Massetemperatur [°C] |
|---|---|---|
| B6 | 40 | 260 |
| VB3 | 40 | 275 |
| B3, B15, B17 | 85 | 275 |
| B7, B8, B9, B13 | 85 | 290 |
| VB6 | 60 | 270 |
| B18, VB5, B5, B10, B11, B12, B14 | 100 | 300 |
| VB2 | 120 | 330 |
| VB7 | 130 | 330 |

Tabelle 3: Einfluss der Anfärbemethode (Anfärbemedium: Maybelline Color Sensational Cream Gloss Fabulous Pink 137) auf $\Delta L^*$ und $\Delta E$ anhand der Beispiele B2 und B16 und der Vergleichsbeispiele VB3 und VB7

| Anfärbemethode | B2 | | B17 | | VB3 | | VB7 | |
|---|---|---|---|---|---|---|---|---|
| Konzentration des Anfärbemediums; Lagerdauer | $\Delta L^*$ | $\Delta E$ | $\Delta L^*$ | $\Delta E$ | $\Delta L^*$ | $\Delta E$ | $\Delta L^*$ | $\Delta E$ |
| **Methode A** 100% (ohne Sebum); 72 h (65°C/ 90% r.F.) | -0.4 | 1.1 | -0.4 | 0.89 | -3.8 | 33 | -2.6 | 7.7 |
| **Methode B** 100% (ohne Sebum); 24 h (65°C/ 90% r.F.) | | 0.53 | | 0.41 | | 26 | | 5.2 |
| **Methode C** 25% in Sebum; 24h (65°C/90% r.F.) | | 0.18 | | 0.17 | | 17 | | 3.1 |

Wie aus Tabelle 3 zu ersehen, wird die Farbhelligkeitsdifferenz $\Delta L^*$ und der Farbabstand $\Delta E$ durch die Verdünnung des Anfärbemediums mit Sebum unabhängig von der zugrundeliegenden Formmasse reduziert. Die Werte für $\Delta L^*$ und $\Delta E$ nehmen bei Verlängerung der Lagerungsdauer von 24h auf 72h deutlich zu und der nach 24h gemessen $\Delta E$-Wertes wird in einigen Fällen mehr als verdoppelt. Bei allen drei Anfärbeversuchen der Artikel von Beispiel B2 und B16 ergibt sich eine Anfärbeneigung AN=1, dennoch erhöht sich der $\Delta E$ um den Faktor 5 bzw. 6, wenn anstatt Methode C die Anfärbemethode A gewählt wird. Beim Vergleichsbeispiel VB7 resultiert mit der Anfärbemethode C eine Anfärbeneigung AN=2 und mit Methode A eine Anfärbeneigung AN=3. Aufgrund der intensiveren Anfärbung werden alle weiteren beschriebenen Anfärbeversuche mit der Methode A ausgeführt, d.h. es wird kein Sebum zur Verdünnung des Anfärbemediums eingesetzt und die Proben werden 72 Stunden bei 65°C und einer relativen Feuchte von 90% gelagert.

Tabelle 4: Zusammensetzung, Anfärbeneigung (AN), $\Delta L^*$ und $\Delta E$ (bestimmt mit Anfärbemethode A) der Vergleichsbeispiele VB1 bis VB7

| | Einheit | VB1 | VB2 | VB3 | VB4 | VB5 | VB6 | VB7 |
|---|---|---|---|---|---|---|---|---|
| ***Zusammensetzung*** | | | | | | | | |
| PA12 | Gew.-% | 96.15 | | | | | 35 | |
| 6T/66 (60:40) | Gew.-% | | 62.5 | | | | | |
| MXD6 | Gew.-% | | | 96.15 | | | | |
| 6T/6I (33:67) | Gew.-% | | | | 96.15 | | | |
| 10T/612 (80:20) | Gew.-% | | | | | 96.15 | | |
| 10T/6T (85:15) | Gew.-% | | | | | | | 50 |

(fortgesetzt)

| | Einheit | VB1 | VB2 | VB3 | VB4 | VB5 | VB6 | VB7 |
|---|---|---|---|---|---|---|---|---|
| Zusammensetzung | | | | | | | | |
| MACM12 | Gew.-% | | | | | | 15 | |
| Hitzestabilisator | Gew.-% | | 0.5 | | | | | |
| Zinksulfid | Gew.-% | 3.85 | | 3.85 | 3.85 | 3.85 | | |
| Titandioxid | Gew.-% | | 15 | | | | | 20 |
| Calciumcarbonat | Gew.-% | | | | | | | 20 |
| Glasfasern A | Gew.-% | | 22 | | | | 50 | 10 |
| Anfärbeneigung | | | | | | | | |
| $\Delta$L Senf | | -2.2 | -3.9 | -13.2 | -3.8 | -0.8 | -2.0 | -1.0 |
| $\Delta$L Lippenstift | | -5.3 | -12.8 | -3.8 | -6.5 | -3.9 | -3.3 | -2.6 |
| $\Delta$E Senf | | 50 | 29 | 44 | 33 | 21 | 39 | 11 |
| $\Delta$E Lipgloss | | 30 | 47 | 33 | 21 | 16 | 14 | 7.7 |
| AN (Senf, Lipgloss) | | 4 | 4 | 4 | 4 | 4 | 4 | 3 |
| Mechanische Eigenschaften (trockener Zustand) | | | | | | | | |
| Zug-E-Modul | MPa | 1600 | | 4000 | 2800 | | 14000 | 7300 |
| Reissfestigkeit | MPa | 50 | | 57 | 71 | | 170 | 85 |
| Reissdehnung | % | >50 | | 30 | 137 | | 2.6 | 1.4 |
| Schlagzähigkeit 23°C | kJ/m$^2$ | o.B. | | 50 | | | 90 | 32 |
| Kerbschlagzähigkeit 23°C | kJ/m$^2$ | o.B. | | 4 | | | 20 | 4 |
| Linearer Spritzschwund längs | % | 0.80 | 0.15 | | | 0.65 | | |
| Linearer Spritzschwund quer | % | 0.90 | 0.80 | | | 1.10 | | |
| Verzug | % | 0.10 | 0.65 | | | 0.45 | | |
| o.B. = ohne Bruch; Verzug = \| Linearer Spritzschwund quer - Linearer Spritzschwund längs \| | | | | | | | | |

Tabelle 5: Zusammensetzung, Anfärbeneigung (AN), $\Delta$L* und $\Delta$E (bestimmt mit Anfärbemethode A) der Beispiele B1 bis B6

| | Einheit | B1 | B2 | B3 | B4 | B5 | B6 |
|---|---|---|---|---|---|---|---|
| Zusammensetzung | | | | | | | |
| MACM12 | Gew.-% | 100 | 96.15 | 47.8 | | | |
| MACMI/12 | Gew.-% | | | | 96.15 | | |
| MACMT/MACMI/12 | Gew.-% | | | | | 96.15 | |
| MACM10 | Gew.-% | | | | | | 96.15 |
| Hitzestabilisator | Gew.-% | | | 0.35 | | | |
| Zinksulfid | Gew.-% | | 3.85 | 3.85 | 3.85 | 3.85 | 3.85 |
| Glasfasern C | Gew.-% | | | 48 | | | |
| Anfärbeneigung (trockener Zustand) | | | | | | | |
| $\Delta$L Senf | | -0.4 | -0.2 | -0.2 | +/-0.0 | -0.2 | -0.4 |
| $\Delta$L Lippenstift | | -0.7 | -0.4 | -0.7 | -0.3 | -0.5 | -0.2 |

**EP 2 949 704 B1**

(fortgesetzt)

| Anfärbeneigung (trockener Zustand) | | | | | | | |
|---|---|---|---|---|---|---|---|
| ΔE Senf | | 1.3 | 3.1 | 3.5 | 0.6 | 0.7 | 2.5 |
| ΔE Lipgloss | | 0.8 | 1.1 | 1.9 | 0.5 | 0.5 | 1.2 |
| AN (Senf, Lipgloss) | | 1 | 2 | 2 | 1 | 1 | 2 |
| **Mechanische Eigenschaften** | | | | | | | |
| Zug-E-Modul | MPa | 1500 | | | 2300 | 2200 | |
| Reissfestigkeit | MPa | 50 | | | 50 | 65 | |
| Reissdehnung | % | 118 | | | >50 | >50 | |
| Schlagzähigkeit 23°C | kJ/m² | | | | o.B. | o.B. | |
| Kerbschlagzähigkeit 23°C | kJ/m² | | | | 8 | 10 | |
| Linearer Spritzschwund längs | % | 0.60 | 0.55 | 0.03 | 0.58 | 0.58 | 0.57 |
| Linearer Spritzschwund quer | % | 0.65 | 0.60 | 0.26 | 0.62 | 0.62 | 0.62 |
| Verzug | % | 0.05 | 0.05 | 0.23 | 0.04 | 0.04 | 0.05 |
| o.B. = ohne Bruch; Verzug = \| Linearer Spritzschwund quer - Linearer Spritzschwund längs \| | | | | | | | |

Tabelle 6: Zusammensetzung, Anfärbeneigung (AN), ΔL und ΔE (bestimmt mit Anfärbemethode A) der Beispiele B7 bis B13

| | Einheit | **B7** | **B8** | **B9** | **B10** | **B11** | **B12** | **B13** |
|---|---|---|---|---|---|---|---|---|
| **Zusammensetzung** | | | | | | | | |
| MACMI/12 | Gew.-% | 66.85 | 47.65 | 37.95 | | | | |
| MACMT/MACMI/12 | Gew.-% | | | | 66.85 | 47.65 | 37.95 | |
| PACM12 | Gew.-% | | | | | | | 95.65 |
| Hitzestabilisator | Gew.-% | 0.5 | 0.5 | 0.5 | 0.5 | 0.5 | 0.5 | 0.5 |
| Zinksulfid | Gew.-% | 3.85 | 3.85 | 3.85 | 3.85 | 3.85 | 3.85 | 3.85 |
| Glasfasern B | Gew.-% | 28.8 | 48.0 | 57.7 | 28.8 | 48.0 | 57.7 | |
| **Anfärbeneigung** | | | | | | | | |
| ΔL Senf | | -0.7 | -0.3 | -0.4 | -0.4 | -0.4 | -0.3 | |
| ΔL Lippenstift | | -1.5 | -0.7 | -1.1 | -0.9 | -0.9 | -1.1 | |
| ΔE Senf | | 3.0 | 3.3 | 3.5 | 3.0 | 3.5 | 3.9 | 6.0 |
| ΔE Lipgloss | | 2.8 | 2.8 | 2.9 | 2.8 | 2.6 | 3.2 | 1.4 |
| AN (Senf, Lipgloss) | | 2 | 2 | 2 | 2 | 2 | 2 | |
| **Mechanische Eigenschaften (trockener Zustand)** | | | | | | | | |
| Zug-E-Modul | MPa | 8600 | 15200 | 19800 | 9200 | 14500 | 19000 | 1430 |
| Reissfestigkeit | MPa | 166 | 187 | 188 | 171 | 183 | 180 | 50 |
| Reissdehnung | % | 3.4 | 1.9 | 1.4 | 3.0 | 1.9 | 1.3 | 130 |
| Schlagzähigkeit 23°C | kJ/m² | 61 | 43 | 33 | 60 | 42 | 26 | o.B. |
| Kerbschlagzähigkeit 23°C | kJ/m² | 10 | 10 | 9 | 8 | 9 | 8 | 13 |

(fortgesetzt)

| Mechanische Eigenschaften (trockener Zustand) | | | | | | | | |
|---|---|---|---|---|---|---|---|---|
| Linearer Spritzschwund längs | % | 0.15 | 0.05 | 0.02 | 0.13 | 0.04 | 0.02 | 0.54 |
| Linearer Spritzschwund quer | % | 0.45 | 0.30 | 0.22 | 0.42 | 0.26 | 0.20 | 0.65 |
| Verzug | % | 0.30 | 0.25 | 0.20 | 0.29 | 0.22 | 0.18 | 0.11 |
| o.B. = ohne Bruch; Verzug = | Linearer Spritzschwund quer - Linearer Spritzschwund längs | | | | | | | | | |

Tabelle 7: Zusammensetzung, Anfärbeneigung (AN), $\Delta L^*$ und $\Delta E$ (bestimmt mit Anfärbemethode A) der Beispiele B14 bis B20

| | Einheit | **B14** | **B15** | **B16** | **B17** | **B18** | **B19** | **B20** |
|---|---|---|---|---|---|---|---|---|
| Zusammensetzung | | | | | | | | |
| MACMI/12 | Gew.-% | 53.45 | | | | | | |
| MACMT/MACMI/12 | Gew.-% | | 53.45 | | | | | |
| TMDC12 | Gew.-% | | | 53.45 | 96.15 | 66.85 | 75.65 | |
| MACM12/PACM12 | Gew.-% | | | | | | | 95.65 |
| 10T/612 (80:20) | Gew.-% | 13.4 | 13.4 | 13.4 | | | 20 | |
| Hitzestabilisator | Gew.-% | 0.5 | 0.5 | 0.5 | | 0.5 | 0.5 | 0.5 |
| Zinksulfid | Gew.-% | 3.85 | 3.85 | 3.85 | 3.85 | 3.85 | 3.85 | 3.85 |
| Glasfasern B | Gew.-% | 28.8 | 28.8 | 28.8 | | 28.8 | | |
| Anfärbeneigung | | | | | | | | |
| $\Delta L$ Senf | | +/-0.0 | -0.2 | -0.2 | -0.3 | -0.2 | +/-0.0 | |
| $\Delta L$ Lippenstift | | -0.7 | -0.6 | -0.6 | -0.4 | -0.5 | +/-0.0 | |
| $\Delta E$ Senf | | 3.3 | 2.6 | 3.3 | 1.5 | 2.9 | 3.0 | 5.8 |
| $\Delta E$ Lipgloss | | 2.5 | 1.8 | 1.8 | 0.89 | 1.9 | 0.7 | 1.3 |
| AN (Senf, Lipgloss) | | 2 | 2 | 2 | 1 | 2 | 2 | 2 |
| Mechanische Eigenschaften (trockener Zustand) | | | | | | | | |
| Zug-E-Modul | MPa | 8700 | 9000 | 7500 | 1600 | 7200 | 1800 | 1460 |
| Reissfestigkeit | MPa | 169 | 176 | 141 | 55 | 138 | 50 | 56 |
| Reissdehnung | % | 3.6 | 3.2 | 3.2 | 104 | 4.0 | 19 | 140 |
| Schlagzähigkeit 23°C | kJ/m$^2$ | 81 | 66 | 63 | o.B. | 67 | o.B. | o.B. |
| Kerbschlagzähigkeit 23°C | kJ/m$^2$ | 10 | 8 | 10 | 8 | 12 | 8 | 11 |
| Linearer Spritzschwund längs | % | 0.18 | 0.16 | 0.16 | 0.60 | 0.14 | 0.65 | 0.58 |
| Linearer Spritzschwund quer | % | 0.55 | 0.50 | 0.48 | 0.62 | 0.42 | 0.75 | 0.65 |
| Verzug | % | 0.37 | 0.34 | 0.32 | 0.02 | 0.28 | 0.10 | 0.07 |
| o.B. = ohne Bruch; Verzug = | Linearer Spritzschwund quer - Linearer Spritzschwund längs | | | | | | | | | |

Legende:

| | |
|---|---|
| 6T/6I (70:30) | Teilkristallines Polyamid auf Basis von TPS, IPS und HMDA, Tm = 325°C, $\eta_{rel}$ = 1.58, $\Delta$Hm = 55 J/g. |
| 6T/66 (60:40) | Teilkristallines Polyamid auf Basis von TPS, ADS und HMDA, Tm = 310°C, $\eta_{rel}$ = 1.60, $\Delta$Hm = 60 J/g |
| 10T/6T (85:15) | Teilkristallines Polyamid auf Basis von TPS, HMDA und DMDA, Tm = 300°C, $\eta_{rel}$ = 1.68, $\Delta$Hm = 58 J/g |
| 10T/612 (80:20) | Teilkristallines Polyamid auf Basis von TPS, DDDS, HMDA und DMDA, Tm = 256°C, $\eta_{rel}$ = 1.72, $\Delta$Hm = 48 J/g |
| PA 12 | Teilkristallines Polyamid auf Basis von LL, Tm = 178°C, $\eta_{rel}$ = 1.96, $\Delta$Hm = 57 J/g |
| MXD6 | Teilkristallines Polyamid auf Basis von MXDA und ADS, Tm = 240°C, $\eta_{rel}$ = 1.80, $\Delta$Hm = 44 J/g |
| MACM12 | Amorphes Polyamid auf Basis von MACM und DDDS, Tg = 156°C, $\eta_{rel}$ = 1.82, $\Delta$Hm < 4 J/g, LT = 93%. |
| MACM10 | Amorphes Polyamid auf Basis von MACM, DDS, Tg=165°C, $\eta_{rel}$ =1.75, $\Delta$Hm < 4 J/g, LT = 93%. |
| MACMI/12 (65:35) | Amorphes Polyamid auf Basis von MACM, IPS und LL, Tg = 154°C, $\eta_{rel}$ = 1.76, $\Delta$Hm < 4 J/g, LT =92% |
| MACMT/MACMI/12 (37:37: 26) | Polyamid auf Basis von MACM, TPS, IPS und LL, Tg = 160°C, $\eta_{rel}$ = 1.70, $\Delta$Hm < 4 J/g, LT = 92%. |
| 6T/6I (33:67) | Amorphes Polyamid auf Basis von TPS, IPs und HMDA, Tg = 125°C, $\eta_{rel}$ = 1.54, $\Delta$Hm < 4 J/g. |
| TMDC 12 | Amorphes Polyamid auf Basis von TMDC, DDDS, Tg=170°C, $\eta_{rel}$ =1.75, $\Delta$Hm < 4 J/g, LT = 92%. |
| PACM12 | Mikrokristallines Polyamid auf Basis von PACM und DDDS, Tm=251°C, Tg=140°C, $\eta_{rel}$ =1.91, $\Delta$Hm = 22 J/g, LT = 91%. |
| MACM12/PACM12 (30:70) | Mikrokristallines Polyamid auf Basis von MACM, PACM und DDDS, Tm=238°C, Tg=147°C, $\eta_{rel}$ =1.85, $\Delta$Hm = 12 J/g, LT = 91%. |
| Glasfaser A | Schnittglasfasern E10 Vetrotex 995 aus E-Glas, mit einer Länge von 4.5 mm und einem Durchmesser von 10 $\mu$m (kreisförmiger Querschnitt) von Owens Corning Fiberglas. |
| Glasfaser B | Schnittglasfasern Micromax 771 aus E-Glas, mit einer Länge von 4.5 mm und einem Durchmesser von 6 $\mu$m (kreisförmiger Querschnitt) von Owens Corning Fiberglas. |
| Glasfaser C | Schnittglasfasern CSG3PA-820 aus E-Glas, mit einer Länge von 3 mm und flachem Querschnitt von 7 x 28 $\mu$m von Nitto Boseki. |
| Zinksulfid | Sachtolith HD-S (Sachtleben), mittlere Partikelgrösse im Bereich von 0.30 bis 0.35 $\mu$m. |
| Titandioxid | Ti-Pure R-104 (DuPont), mittlere Partikelgrösse im Bereich von 0.22 $\mu$m. |
| Calciumcarbonat | Socal P3 (Solvay), mittlere Partikelgrösse im Bereich von 0.18 - 0.50 $\mu$m. |

Verwendete Abkürzungen:

TPS=Terephthalsäure, IPS=Isophthalsäure, ADS=Adipinsäure, DDS=1,10-Decandisäure, DDDS=1,12-Dodecandisäure, HMDA=1,6-Hexandiamin, DMDA=1,10-Decandiamin, MXDA=m-Xylylendiamin, MACM=Bis-(4-amino-3-methyl-cyclohexyl)-methan, PACM=Bis-(4-amino-cyclohexyl)-methan, TMDC= Bis-(4-Amino-3,5-dimethylcyclohexyl)-methan, LL=Laurinlactam)

Die in Klammern angegebenen Verhältnisse stehen für Molverhältnisse der Untereinheiten, so bedeutet z.B. 10T/6T (85:15), dass 85 Mol-% 10T Einheiten neben 15 Mol-% 6T Einheiten vorliegen, und MACMT/MACMI/12 (37:37:26), dass 37 Mol-% MACMT Einheiten, 37 Mol-% MACMI Einheiten und 12 Mol-% Lactam 12 Einheiten (Laurinlactam) vorhanden sind.

Die Messungen wurden nach folgenden Normen und an folgenden Prüfkörpern durchgeführt.

Der **Zug-E-Modul** wurde nach ISO 527 mit einer Zuggeschwindigkeit von 1 mm/min, die Streckspannung, die **Reissfestigkeit** und die **Reissdehnung** wurden bestimmt gemäss ISO 527 mit einer Zuggeschwindigkeit von 50 mm/min (unverstärkte Varianten) oder einer Zuggeschwindigkeit von 5 mm/min (verstärkte Varianten) bei einer Temperatur von 23 °C, wobei als Probekörper ein ISO-Zugstab , Norm: ISO/CD 3167, Typ A1, 170 x 20/10 x 4 mm, verwendet wurde.

**Schlagzähigkeit** und **Kerbschlagzähigkeit** nach Charpy wurden nach ISO 179 am ISO-Prüfstab, Norm: ISO/CD 3167, Typ B1, 80 x 10 x 4 mm bei Temperatur 23 °C gemessen. Das **thermische Verhalten** (Schmelztemperatur (Tm), Schmelzenthalpie ($\Delta$Hm), Glasumwandlungstemperatur (Tg)) wurde anhand der ISO-Norm 11357-11-2 am Granulat bestimmt. Die Differential Scanning Calorimetry (DSC) wurde mit Aufheizrate von 20 °C/min durchgeführt. Für die Glasumwandlungstemperatur (Tg) wird die Temperatur für die Mittelstufe bzw. den Wendepunkt angegeben.

Die **relative Viskosität** ($\eta_{rel}$) wurde gemäss DIN EN ISO 307 anhand von 0,5 Gew.-%-igen m-Kresollösungen bei 20 °C gemessen. Als Probe wird Granulat verwendet.

**Die Verarbeitungsschwindung** (Linearer Spritzschwund längs/quer) wurde gemäss ISO 294-4 an einer Platte, Typ D2, 60 x 60 x 2 mm (gemäss Norm ISO 294-3) bestimmt. Die Platten wurden mit den Masse- und Werkzeugtemperaturen, wie sie in Tabelle 1 angegeben sind, hergestellt. Sie wurden vor der Messung 48 h bei Raumtemperatur über Silicagel gelagert. Die Verarbeitungsschwindung wurde längs und quer zur Fliessrichtung in Bezug auf die Formnestgrösse bestimmt. Angegeben wird der arithmetische Mittelwert aus den Messungen an 5 Platten.

Bestimmung der **Anfärbeneigung** bzw. der **Fleckbeständigkeit** (Stain Resistance)

Auf Probenkörper der Dimension 2 x 40 x 50 mm(Farbplättchen) werden mit einem Baumwolltupfer die Anfärbemedien

• Lipgloss: Maybelline Color Sensational Cream Gloss Fabulous Pink 137 (Maybelline New York, Jade Düsseldorf, Gemey-Paris, 16 Place Vendome, 75001 Paris) oder

• Senf: Thomy scharfer Senf (Nestle Suisse AG, 1800 Vevey, Schweiz)

flächig aufgetragen und einer 24 bzw. 72 stündigen Lagerung im Klimaschrank bei 65°C und einer relativen Feuchte von 90% unterworfen. In einigen Versuchen wird eine Mischung aus 1 Teil Anfärbemedium und 3 Teilen Rindertalg roh (Bovinum sebum crudum, Art. Nr. 26-6240-01, Charge 2010.11.0664, Hänseler AG, 9101 Herisau, Schweiz) auf die Farbplättchen aufgetragen. Folgende Anfärbemethoden wurden durchgeführt:

| | |
|---|---|
| Methode A: | Das Anfärbemedium wird zu 100% eingesetzt, d.h. es wird keine Verdünnung mit Sebum vorgenommen, und die Proben werden 72 Stunden bei 65°C und einer relativen Feuchte von 90% gelagert. |
| Methode B: | Das Anfärbemedium wird zu 100% eingesetzt, d.h. es wird keine Verdünnung mit Sebum vorgenommen, und die Proben werden 24 Stunden bei 65°C und einer relativen Feuchte von 90% gelagert. |
| Methode C: | Das Anfärbemedium wird im Verhältnis von 1:3 mit Sebum gemischt, d.h. die Konzentration des Anfärbemediums in dieser Mischung beträgt 25 Gew.-%, und die Proben werden 24 Stunden bei 65°C und einer relativen Feuchte von 90% gelagert. |

Nach beendeter Lagerung werden die Farbplättchen auf 23°C temperiert und dann unter fliessendem, handwarmem Wasser mit einem mit wässriger Seifenlösung versehenen Schwämmchen oberflächlich gereinigt, bis die Probenoberfläche frei ist von anhaftenden Rückständen des Anfärbemediums. Die Referenz-Farbplättchen ohne Anfärbemedien werden ebenfalls der Lagerung und dem Reinigungsschritt unterworfen.

Nach Reinigung werden die CIE L*a*b*-Werte von Referenz- und Test-Farbplättchen mit einem Spectrophotometer der Firma Datacolor (Gerätebezeichnung: Datacolor 650) unter den folgenden Messbedingungen vor einem weisslackierten Kontrastblech bestimmt; Messmodus: Reflexion, Messgeometrie: D/8°, Lichtart: D 65 10, Glanz: eingeschlossen, Kalibrierung: UV-kalibriert, Messblende: SAV.

Bei Verwendung der L*, a*, und b*-Werte von Referenz und Probe entsprechend dem CIELAB Systems (DIN 6174) berechnet sich die Farbhelligkeitsdifferenz $\Delta$L* wie folgt:

$$\Delta L^* = L^*_{Probe} - L^*_{Referenz}$$

Der Farbabstand $\Delta$E zwischen den Farborten (L*a*b*)Referenz und (L*a*b*)Probe wird gemäss ISO 12647 und ISO 13655 als euklidischer Abstand wie folgt berechnet:

$$\Delta E = \sqrt{(L^*_{Probe} - L^*_{Referenz})^2 + (a^*_{Probe} - a^*_{Referenz})^2 + (b^*_{Probe} - b^*_{Referenz})^2}$$

Die Anfärbeneigung (AN) im beschriebenen Anfärbetest wird durch die Änderung des Farbeindrucks $\Delta$E quantifiziert; sie kann wie folgt klassifiziert werden:

AN=1: Keine oder nur sehr geringe Anfärbung ($0 \leq \Delta E \leq 2$)

AN=2: Geringe Anfärbung (2 < ∆E ≤ 6)
AN=3: Deutliche Anfärbung (6 < ∆E ≤12)
AN=4: Starke Anfärbung (entspricht einem ∆E >12)

Erfindungsgemässe Artikel (Formteile, Bauteile) haben eine Anfärbeneigung der Klasse 1 oder 2, d.h. der ∆E-Wert liegt bei maximal 6.

Die für die Farbmessung verwendeten Farbplättchen der Dimension 2 x 40 x 50 mm wurden aus diesen Materialien auf einer vollelektrischen Spritzgussmaschine der Firma Arburg (Gerätebezeichnung: ARBURG Allrounder 320 A 500-170) mit temperiertem Werkzeug gespritzt. Die Spritzgussparameter sind in Tabelle 1 aufgeführt. **Lichttransmission** (LT, Transparenz) und Haze wurden nach ASTM D 1003 an Platten der Dimension 2 x 60 x 60mm oder an Rundplatten 2 x 70mm bei einer Temperatur von 23°C mit dem Messgerät Haze Gard Plus der Firma Byk Gardner mit der CIE Lichtart C bestimmt. Die Lichttransmissionswerte werden in % der eingestrahlten Lichtmenge angegeben.

**Patentansprüche**

1. Verwendung einer Polyamidformmasse bestehend aus:

   (A) 30 - 100 Gew.-% eines Polyamids oder einer Polyamidmischung, bestehend aus:

   (A1) 50 - 100 Gew.-% mindestens eines amorphen und/oder mikrokristallinen Polyamids mit einer Glasübergangstemperatur von wenigstens 100°C, gemessen nach ISO-Norm 11357-11-2, am Granulat mit Differential Scanning Calorimetry (DSC) mit einer Aufheizrate von 20 °C/min, wobei amorphe Polyamide des Polyamids (A1) Schmelzwärmen von höchstens 4 J/g, und mikrokristalline Polyamide des Polyamids (A1) Schmelzwärmen im Bereich von 4 - 25 J/g aufweisen, jeweils bestimmt gemäss ISO 11357-11-2 an Granulat, Differential Scanning Calorimetry (DSC) mit einer Aufheizrate von 20 °C/min, basierend auf:

   (a1) 20 - 100 Mol-% wenigstens eines cycloaliphatischen Diamins; und
   0 - 80 Mol-% wenigstens eines anderen aliphatischen und/oder aromatischen Diamins;
   wobei sich die Mol-% innerhalb der Komponente (a1) auf 100 Mol-% ergänzen, sowie
   (a2) aromatischen und/oder aliphatischen Dicarbonsäuren mit mindestens 6 Kohlenstoffatomen,

   mit der Massgabe, dass bis zu 45 Mol-% der Gesamtheit der Monomere der Komponenten (a1) und (a2) ersetzt sein können durch Lactame mit 6 bis 12 Kohlenstoffatomen oder Aminocarbonsäuren mit 6 bis 12 Kohlenstoffatomen;
   (A2) 0 - 50 Gew.-% mindestens eines von (A1) verschiedenen, teilaromatischen Polyamids;

   wobei sich (A1) und (A2) auf 100% Komponente (A) ergänzen;
   (B) 10 -70 Gew.-% faserförmige (B1) und partikuläre (B2) Zuschlagstoffe, wobei die faserförmigen (B1) Zuschlagstoffe ausschliesslich ausgewählt sind als Glasfasern, und
   wobei die partikulären (B2) Zuschlagstoffe ausgewählt sind aus der Gruppe bestehend aus: Talk, Glimmer, Silikaten, Quarz, Wollastonit, Kaolin, Kreide, gemahlenem oder gefälltem Calciumcarbonat, Kalk, Feldspat, Bariumsulfat, Zinkoxid, Zinksulfid, Lithopone, und Mischungen hiervon, und die partikulären (B2) Zuschlagstoffe über eine mittlere Partikelgrösse (D50) im Bereich von 0.1-40 µm verfügen.
   (C) 0 - 30 Gew.-% von (A) verschiedene Polymere
   (D) 0 - 25 Gew.-% eines Flammschutzmittels
   (E) 0 - 3 Gew.-% Additive;

   wobei die Summe der Bestandteile (A) - (E) 100 Gew.-% ausmacht,
   zur Herstellung eines anfärberesistenten Artikels, bei welchem die Anfärbeneigung (AN) des Artikels, wie beschrieben in der Beschreibung unter Verwendung der Methode A 1 oder 2 ist.

2. Verwendung einer Polyamidformmasse nach Anspruch 1, **dadurch gekennzeichnet, dass** innerhalb der Komponente (B)
   die partikulären (B2) Zuschlagstoffe über eine mittlere Partikelgrösse (D50) im Bereich von 0.2-20 µm, insbesondere im Bereich von 0.3-10 µm verfügen.

3. Verwendung einer Polyamidformmasse nach Anspruch 1 oder 2, **dadurch gekennzeichnet, dass** das Polyamid der Komponente (A1) eine Glasübergangstemperatur von wenigstens 130°C, wenigstens 140°C, oder wenigstens 150°C aufweist, wobei das Polyamid der Komponente (A1) weiterhin bevorzugtermassen eine Glasübergangstemperatur von nicht mehr als 220°C, oder nicht mehr als 200°C aufweist

und/oder **dadurch gekennzeichnet, dass** amorphe Polyamide des Polyamids (A1) Schmelzwärmen von höchstens 2 J/g, bestimmt gemäss ISO 11357-11-2 an Granulat, unter Verwendung von Differential Scanning Calorimetry (DSC) mit einer Aufheizrate von 20 °C/min, aufweisen,

und/oder dass mikrokristalline Polyamide der Komponente (A1) Schmelzwärmen im Bereich von 8 - 22 J/g, bestimmt gemäss ISO 11357-11-2 an Granulat, Differential Scanning Calorimetry (DSC) mit einer Aufheizrate von 20 °C/min, aufweisen.

4.  Verwendung einer Polyamidformmasse nach einem der vorhergehenden Ansprüche, **dadurch gekennzeichnet, dass** der gemäss EN ISO 11664-4 im CIELAB-Farbraum bestimmte E-Wert (Farbort) wird durch einen Anfärbetest um einen ∆E-Wert von höchstens 6, höchstens 5, oder höchstens 4 verändert wird und/oder dass die Artikel sowohl vor als auch nach der Anfärbung eine Luminanz L* von bevorzugtermassen > 80, oder > 90, oder > 95 aufweisen, wobei bevorzugtermassen alternativ oder zusätzlich der Betrag von a* respektive unabhängig davon Betrag von b* jeweils < 10, oder < 5, oder < 3 oder im Bereich von 0 ist.

5.  Verwendung einer Polyamidformmasse nach einem der vorhergehenden Ansprüche, **dadurch gekennzeichnet, dass** innerhalb der Komponente (A1) der Anteil an (a1) aufgebaut ist aus 40-100 Mol-% wenigstens eines cycloaliphatischen Diamins; und 0-60 Mol-% wenigstens eines anderen aliphatischen und/oder aromatischen Diamins, vorzugsweise aus 50-100 Mol-% oder 60-100 Mol-% wenigstens eines cycloaliphatischen Diamins; und 0-50 Mol-% respektive 0-40 Mol-% wenigstens eines anderen aliphatischen und/oder aromatischen Diamins, wobei insbesondere bevorzugt (a1) im wesentlichen nur aus cycloaliphatischen Diaminen aufgebaut ist,

und/oder dass es sich innerhalb des Anteils (a1) beim anderen aliphatischen und/oder aromatischen Diamin um eines ausgewählt aus der Gruppe: 1,4-Butandiamin, 1,5-Pentandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin, 1,14-Tetradecandiamin, m-Xylylendiamin und p-Xylylendiamin oder Mischungen davon handelt, wobei geradkettige aliphatische Diamine mit 6 -10 Kohlenstoffatomen bevorzugt sind, insbesondere 1,6-Hexandiamin.

6.  Verwendung einer Polyamidformmasse nach einem der vorhergehenden Ansprüche, **dadurch gekennzeichnet, dass** das wenigstens eine cycloaliphatische Diamin (a1) der Komponente (A1) 6 bis 24 Kohlenstoffatomen aufweist, und insbesondere ausgewählt ist aus der folgenden Gruppe: Bis-(aminocyclohexyl)methan, Bis-(aminocyclohexyl)propan, Norbornandiamin, Bis-(aminomethyl)-norbornan, Diaminocyclohexandiamin, Isophorondiamin, Diaminodicyclohexylpropan, jeweils alkylsubstituierter oder unsubstituierter Form, sowie Mischungen davon wobei als Alkylsubstituenten lineare und/oder verzweigte C1-C6, bevorzugt C1-C4 Alkylgruppen bevorzugt sind, insbesondere Methyl-, Ethyl-, Propyl-, Isopropyl- oder Butyl-Gruppen bevorzugt sind, insbesondere Methylgruppen.

7.  Verwendung einer Polyamidformmasse nach einem der vorhergehenden Ansprüche, **dadurch gekennzeichnet, dass** das wenigstens eine cycloaliphatische Diamin innerhalb von (a1) der Komponente (A1) ausgewählt ist aus der folgenden Gruppe: Bis-(4-amino-3-methyl-cyclohexyl)-methan (MACM), Bis-(4-aminocyclohexyl)-methan (PACM), Bis-(4-Amino-3-ethyl-cyclohexyl)-methan (EACM), Bis-(4-Amino-3,5-dimethyl-cyclohexyl)-methan (TMDC), 2,2-(4,4'-Diaminodicyclohexyl)propan (PACP) oder Mischungen davon, wobei insbesondere bevorzugt Bis-(4-amino-3-methyl-cyclohexyl)-methan (MACM), Bis-(4-Amino-3,5-dimethyl-cyclohexyl)-methan (TMDC), Bis-(4-aminocyclohexyl)-methan (PACM) oder Mischungen davon eingesetzt sind, wobei weiterhin vorzugsweise innerhalb der Komponente (A1) nicht mehr als 10 Mol-%, vorzugsweise nicht mehr als 5 Mol-%, dieser Diamine ersetzt sind durch andere aliphatische und/oder aromatische Diamine, und wobei insbesondere vorzugsweise die Komponente (A1) im wesentlichen frei ist von solchen weiteren anderen, nicht-cycloaliphatischen Diaminen.

8.  Verwendung einer Polyamidformmasse nach einem der vorhergehenden Ansprüche, **dadurch gekennzeichnet, dass** die wenigstens eine aromatische und/oder aliphatische Dicarbonsäure mit mindestens 6 Kohlenstoffatomen (a2) der Komponente (A1) ausgewählt ist aus der folgenden Gruppe: geradkettige unverzweigte aliphatische Dicarbonsäuren, aromatische Dicarbonsäuren wie insbesondere Isophthalsäure, Terephthalsäure, Naphthalindicarbonsäure, sowie Mischungen davon, wobei vorzugsweise die aromatische und/oder aliphatische Dicarbonsäure mit mindestens 6 Kohlenstoffatomen (a2) der Komponente (A1) ausgewählt ist aus der folgenden Gruppe: Isophthalsäure allein, Mischung aus Isophthalsäure und Terephthalsäure, vorzugsweise in einem Molverhältnis von 40/60 bis 60/40, oder aliphatische unverzweigte C10-C14 Dicarbonsäure, vorzugsweise 1,10-Decandicarbonsäure, 1,12-Dodecandicarbonsäure.

9. Verwendung einer Polyamidformmasse nach einem der vorhergehenden Ansprüche, **dadurch gekennzeichnet, dass** die Komponente (A1) frei von Terephthalsäure und/oder Isophthalsäure ist, und weiterhin vorzugsweise der Anteil an Lactam und/oder Aminocarbonsäure im Wesentlichen null ist, oder dass, wenn Komponente (A1) Terephthalsäure und/oder Isophthalsäure im Rahmen von (a2) enthält, oder wenn (a2) im wesentlichen durch Terephthalsäure und/oder Isophthalsäure gebildet wird, 10-40 Mol-%, vorzugsweise 20-35 Mol-% der Gesamtheit der Monomere der Komponenten (a1) und (a2) ersetzt sind durch Lactame mit 6 bis 12 Kohlenstoffatomen, insbesondere mit 10 oder 12 Kohlenstoffatomen oder Aminocarbonsäuren mit 6 bis 12 Kohlenstoffatomen, insbesondere $\alpha,\omega$-Aminosäuren und insbesondere solchen mit 10 oder 12 Kohlenstoffatomen.

10. Verwendung einer Polyamidformmasse nach einem der vorhergehenden Ansprüche, **dadurch gekennzeichnet, dass** der Anteil an Terephthalsäure innerhalb von Komponente (A1) höchstens 50 mol-%, bezogen auf die Summe aller Dicarbonsäuren von Komponente (A1), beträgt, wobei bevorzugt ist, wenn der Anteil der Terephthalsäure in Komponente A1 kleiner 45 mol-% ist oder keine Terephthalsäure in Komponenten (A1) enthalten ist.

11. Verwendung einer Polyamidformmasse nach einem der vorhergehenden Ansprüche, **dadurch gekennzeichnet, dass** die Komponente (A1) gebildet wird durch ein System der Gruppe ausgewählt aus: MACM9, MACM10, MACM11, MACM12, MACM13, MACM14, MACM16, MACM18, PACM9, PACM10, PACM11, PACM12, PACM13, PACM14, PACM16, PACM18, TMDC9, TMDC10, TMDC11, TMDC12, TMDC13, TMDC14, TMDC15, TMDC16, TMDC17, TMDC18 oder Mischungen oder Copolyamide auf Basis dieser Systeme, insbesondere bevorzugt Systeme des Typs: MACMI/12, MACMT/12, MACMI/MACMT/12, 6I/6T/MACMI/MACMT/12, 6I/MACMI/MACMT, 6I/PACMI/PACMT, 6I/6T/MACMI, MACMI/MACM36, 12/PACMI oder 12/MACMT, 6/PACMT, 6/IPDT oder Mischungen daraus MACM9-18/PACM9-18, insbesondere MACM10/PACM10, MACM12/PACM12 und MACM14/PACM14 und Mischungen davon.

12. Verwendung einer Polyamidformmasse nach einem der vorhergehenden Ansprüche, **dadurch gekennzeichnet, dass** die Komponente (A2) aufgebaut ist aus Dicarbonsäuren, namentlich aromatischen Dicarbonsäuren, bevorzugt ausgewählt aus der Gruppe: Terephthalsäure, Naphthalindicarbonsäure und Isophthalsäure sowie Mischungen davon, und/oder aus Dicarbonsäuren ausgewählt aus der Gruppe: Adipinsäure, Korksäure, Azelainsäure, Sebazinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure, cis- und/oder trans-Cyclohexan-1,4-dicarbonsäure und/oder cis- und/oder trans-Cyolohexan-1,3-dicarbonsäure (CHDA) und Gemischen daraus, wobei Adipinsäure, Isophthalsäure, Sebazinsäure und Dodecandisäure bevorzugt sind, und wobei der Anteil der Terephthalsäure an der Gesamtmenge an Dicarbonsäuren von Komponente (A2) vorzugsweise im Bereich von 50 bis 100 mol-%, bevorzugt im Bereich von 60 bis 95 mol-% und besonders bevorzugt im Bereich von 65 bis 90 mol-% liegt, sowie aus
Diaminen, namentlich ausgewählt aus der folgenden Gruppe: 1,4-Butandiamin, 1,5-Pentandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin, 1,14-Tetradecandiamin, m-Xylylendiamin und p-Xylylendiamin, wobei 1,6-Hexandiamin, 1,10-Decandiamin und 1,12-Dodecandiamin bevorzugt werden,
wobei die Polyamide (A2) auch Lactame oder Aminocarbonsäuren, insbesondere $\alpha,\omega$-Aminosäuren oder Lactame mit 6 bis 12 Kohlenstoffatome enthalten können, bevorzugt ausgewählt aus der folgenden Gruppe: m-Aminobenzoesäure, p-Aminobenzoesäure Caprolactam (CL), $\alpha,\omega$-Aminocapronsäure, $\alpha,\omega$-Aminoheptansäure, $\alpha,\omega$-Aminooctansäure, $\alpha,\omega$-Aminononansäure, $\alpha,\omega$-Aminodecansäure, $\alpha,\omega$-Aminoundecansäure (AUA), Laurinlactam (LL) und $\alpha,\omega$-Aminododecansäure (ADA), wobei besonders bevorzugt sind Caprolactam, $\alpha,\omega$-Aminocapronsäure, Laurinlactam, $\alpha,\omega$-Aminoundecansäure und $\alpha,\omega$-Aminododecansäure.

13. Verwendung einer Polyamidformmasse nach einem der vorhergehenden Ansprüche, **dadurch gekennzeichnet, dass** die Komponente (A) aus einem oder mehreren Polyamiden (A1) besteht,
oder dass die Komponente (A) aus einer Mischung aus einem oder mehreren Polyamiden (A1) mit teilaromatischen Polyamiden (A2) besteht, wobei die Komponente (A2) in dieser Mischung höchstens 50 Gew.-%, bevorzugt höchstens 40 Gew.-% und besonders bevorzugt höchstens 35 Gew.-%, bezogen auf die Polyamidmischung A, ausmacht, und/oder **dadurch gekennzeichnet, dass** der Anteil an Komponente (A) im Bereich von 30-90 Gew.-%, vorzugsweise im Bereich von 30-80 Gew.-% liegt,
dass der Anteil an Komponente (B) im Bereich von 10-65 Gew.-%, vorzugsweise im Bereich von 20-60 Gew.-% liegt,

dass der Anteil an Komponente (C) im Bereich von 1-25 Gew.-%, vorzugsweise im Bereich von 2-15 Gew.-% liegt,

dass der Anteil an Komponente (D) im Bereich von 5-25 Gew.-%, vorzugsweise im Bereich von 5-20 Gew.-% liegt, und dass

der Anteil an Komponente (E) im Bereich von 0.1-2 Gew.-%, vorzugsweise im Bereich von 0.2-1.5 Gew.-% liegt.

14. Verwendung einer Polyamidformmasse nach einem der vorhergehenden Ansprüche, **dadurch gekennzeichnet, dass** die Komponente (A1) gebildet wird durchein System ausgewählt aus der Gruppe: MACM12, MACMI/12, TMDC12, MACMT/MACMI/12 oder einer Mischung davon;

und dabei bevorzugtermassen gleichzeitig (A2) ausgewählt ist als 6T/6I, wobei das Mol-Verhältnis im Bereich von 60:40 bis 80:20 liegt oder insbesondere im Bereich von 65:35 bis 75:25 beträgt, wobei das Verhältnis 70:30 besonders bevorzugt ist.

und/oder dabei bevorzugtermassen gleichzeitig (A2) ausgewählt ist als 10T/6T, 12T/6T, 10T/11, 10T/12, 10T/1010, 10T/1012, 10T/106, 10T/126, und/oder 10T/612 und/oder 3-6T, wobei das Mol-Verhältnis im Bereich von 60:40 bis 95:5 liegt oder insbesondere im Bereich von 70:30 bis 90:10 beträgt,

wobei vorzugsweise der Anteil (A1) 50 - 95 Gew.-%, bevorzugt 60 - 90 Gew.-%, besonders bevorzugt 70 - 90 Gew.-% bezogen auf die Mischung (A) ausmacht.

15. Verwendung einer Polyamidformmasse nach einem der vorhergehenden Ansprüche als Teil eines elektrischen oder elektronischen Bauteils, eines Gehäuses oder eines Gehäusebestandteils, insbesondere Gehäuse oder Gehäuseteile für tragbare elektronische Geräte, Haushaltsgeräte, Haushaltsmaschinen, Geräte und Apparate für die Telekommunikation und Unterhaltungselektronik, Innen und Außenteile im Automobilsektor und im Bereich von anderen Transportmitteln, Innen und Außenteile, vorzugsweise mit tragender oder mechanischer Funktion im Bereich Elektro, Möbel, Sport, Maschinenbau, Sanitär und Hygiene, Medizin, Energie- und Antriebstechnik, insbesondere bevorzugt Mobiltelefone, Smartphones, Organizer, Laptop Computer, Notebook Computer, Tablet Computer, Radios, Kameras, Uhren, Rechner, Abspielgeräte für Musik oder Video, Navigationsgeräte, GPS Geräte, elektronische Bilderrahmen, externe Festplatten und andere elektronische Speichermedien, oder zur Herstellung von Garnen, Fasern, Bikomponentenfasern, Stapelfasern, bevorzugt gekräuselt und/oder texturiert und/oder geschnitten auf eine Länge von 30 - 140 mm, Filamenten und Monofilen.

**Claims**

1. Use of a polyamide moulding composition consisting of:

(A) 30-100 % by weight of a polyamide or a polyamide mixture, consisting of:

(A1) 50-100 % by weight of at least one amorphous and/or microcrystalline polyamide having a glass transition temperature of at least 100 °C measured according to ISO-Norm 11357-11-2 on the granulate with differential scanning calorimetry (DSC) with a heating rate of 20°C/min, wherein amorphous polyamides of the polyamide have a heat of fusion in the range of at most 4 J/g and microcrystalline polyamides have heats of fusion in the range of 4-25 J/g, in each case determined according to ISO 11357-11-2 on the granulate, differential scanning calorimetry (DSC with a heating rate of 20°C/min, based on:

(a1) 20-100 mol % of at least one cycloaliphatic diamine; and 0-80 mol % of at least one other aliphatic and/or aromatic diamine;
wherein the mol-% within component (a1) supplement to 100 mol-%, and
(a2) aromatic and/or aliphatic dicarboxylic acids comprising at least 6 carbon atoms,

with the proviso that up to 45 mol % of the totality of monomers of components (a1) and (a2) can be replaced by lactams comprising 6 to 12 carbon atoms or amino carboxylic acids comprising 6 to 12 carbon atoms;
(A2) 0-50 % by weight of at least one semi-aromatic polyamide different from (A1);

wherein (A1) and (A2) together form 100 % of component (A);
(B) 10-70 % by weight of fibrous fillers (B1) and particulate fillers (B2) wherein the fibrous fillers (B1) are as glass fibers; and
wherein the particulate fillers (B2) are selected from the group consisting of: talc, mica, silicates, quartz, wollastonite, kaolin, chalk, ground or precipitated calcium carbonate, lime, feldspar, barium sulfate, zinc oxide, zinc sulfide, lithopone, and mixtures thereof, and wherein the particulate fillers (B2) has an average particle size (D50) in the range of 0.1-40 μm,
(C) 0-30 % by weight of polymers different from (A)
(D) 0-25 % by weight of a flame retardant
(E) 0-3 % by weight of additives;

wherein the sum of the constituents (A)-(E) makes up 100 % by weight,
for the production of a stain-resistant article, the staining tendency (ST), as described in the specification using method A, of the article being 1 or 2.

2. The use of a polyamide moulding composition according to Claim 1, wherein the particulate fillers (B2) have a mean particle size (D50) in the range of 0.2-20 μm, in particular in the range of 0.3-10 μm.

3. The use of a polyamide moulding composition according to one of the preceding claims, **characterised in that characterised in that** the polyamide of component (A1) has a glass transition temperature of at least 130 °C, preferably at least 140 °C, particularly preferablyor at least 150 °C, wherein the polyamide of component (A1) furthermore preferably has a glass transition temperature of no more than 220 °C, or of no more than 200 °C, and/or **in that** amorphous polyamides of the polyamide (A1) have a heat of fusion of at most 2 J/g, determined in accordance with ISO 11357-11-2 on the granulate, with use of differential scanning calorimetry (DSC) with a heating rate of 20 °C/min, and/or **in that** microcrystalline polyamides of component (A1) have a heat of fusion in the range of 8-22 J/g, determined in accordance with ISO 11357-11-2 on the granulate, differential scanning calorimetry (DSC) with a heating rate of 20 °C/min.

4. The use of a polyamide moulding composition according to one of the preceding claims, **characterised in that** the E value (colour location) determined in the CIELAB colour space in accordance with EN ISO 11664-4 is changed by a staining test by a ΔE value of at most 6, at most 5, or at most 4, and/or **in that** the articles have a luminance L* preferably of > 80, or > 90, or > 95, both before and after the staining, wherein the value of a* or, independently thereof, the value of b* alternatively or additionally is < 10, or < 5, or < 3, or in the range of 0 in each case.

5. The use of a polyamide moulding composition according to one of the preceding claims, **characterised in that** the proportion of (a1) within the component (A1) is formed from 40-100 mol % of at least one cycloaliphatic diamine; and 0-60 mol % of at least one other aliphatic and/or aromatic diamine, preferably from 50-100 mol % or 60-100 mol % of at least one cycloaliphatic diamine; and 0-50 mol % or 0-40 mol % of at least one other aliphatic and/or aromatic diamine, wherein (a1) is particularly preferably formed substantially only from cycloaliphatic diamines, and/or **in that**, within the proportion of (a1), the other aliphatic and/or aromatic diamine is one selected from the group: 1,4-butanediamine, 1,5-pentanediamine, 2-methyl-1,5-pentanediamine, 2-butyl-2-ethyl-1,5-pentanediamine, 1,6-hexanediamine, 2,2,4-trimethylhexamethylenediamine, 2,4,4-trimethylhexamethylenediamine, 1,8-octanediamine, 2-methyl-1,8-octanediamine, 1,9-nonanediamine, 1,10-decanediamine, 1,11-undecanediamine, 1,12-dodecanediamine, 1,13-tridecanediamine, 1,14-tetradecanediamine, m-xylylenediamine and p-xylylenediamine, or mixtures thereof, wherein straight-chain aliphatic diamines comprising 6-10 carbon atoms are preferred, in particular 1,6-hexanediamine.

6. The use of a polyamide moulding composition according to one of the preceding claims, **characterised in that** the at least one cycloaliphatic diamine (a1) of component (A1) comprises 6 to 24 carbon atoms, and in particular is selected from the following group: bis-(aminocyclohexyl)methane, bis-(aminocyclohexyl)propane, norbornanediamine, bis-(aminomethyl)-norbornane, diaminocyclohexanediamine, isophoronediamine, diaminodicyclohexylpropane, in each case in the alkyl-substituted or unsubstituted form, and mixtures thereof, wherein linear and/or branched C1-C6, preferably C1-C4 alkyl groups are preferred as alkyl substituents, in particular methyl groups, ethyl groups, propyl groups, isopropyl groups or butyl groups, with methyl groups being preferred in particular.

7. The use of a polyamide moulding composition according to one of the preceding claims, **characterised in that** the at least one cycloaliphatic diamine within (a1) of component (A1) is selected from the following group: bis-(4-amino-3-methylcyclohexyl)-methane (MACM), bis-(4-amino-cyclohexyl)-methane (PACM), bis-(4-amino-3-ethyl-cyclohexyl)-methane (EACM), bis-(4-amino-3,5-dimethylcyclohexyl)-methane (TMDC), 2,2-(4,4'-diaminodicyclohexyl)propane (PACP), or mixtures thereof, wherein bis-(4-amino-3-methyl-cyclohexyl)-methane (MACM), bis-(4-amino-3,5-dimethyl-cyclohexyl)-methane (TMDC), bis-(4-amino-cyclohexyl)-methane (PACM), or mixtures thereof are used particularly preferably, wherein no more than 10 mol %, or no more than 5 mol % of these diamines are also preferably replaced within the component (A1) by other aliphatic and/or aromatic diamines, and wherein the component (A1) particularly preferably is substantially free from such further, different non-cycloaliphatic diamines.

8. The use of a polyamide moulding composition according to one of the preceding claims, **characterised in that** the at least one aromatic and/or aliphatic dicarboxylic acid comprising at least 6 carbon atoms (a2) of component (A1) is selected from the following group: straight-chain unbranched aliphatic dicarboxylic acids, aromatic dicarboxylic acids, in particular such as isophthalic acid, terephthalic acid, naphthalene dicarboxylic acid, and mixtures thereof, wherein the aromatic and/or aliphatic dicarboxylic acid comprising at least 6 carbon atoms (a2) of component (A1) is preferably selected from the following group: isophthalic acid alone, a mixture of isophthalic acid and terephthalic acid, preferably in a molar ratio from 40/60 to 60/40, or aliphatic unbranched C10-C14 dicarboxylic acid, preferably 1,10-decanedicarboxylic acid, 1,12-dodecanedicarboxylic acid.

9. The use of a polyamide moulding composition according to one of the preceding claims, **characterised in that** the component (A1) is free from terephthalic acid and/or isophthalic acid, and the proportion of lactam and/or amino carboxylic acid is furthermore preferably substantially zero,

or **in that**, if component (A1) contains terephthalic acid and/or isophthalic acid within the scope of (a2), or if (a2) is formed substantially by terephthalic acid and/or isophthalic acid, 10-40 mol %, preferably 20-35 mol % of the totality of monomers in components (a1) and (a2) are replaced by lactams comprising 6 to 12 carbon atoms, in particular comprising 10 or 12 carbon atoms or amino carboxylic acids comprising 6 to 12 carbon atoms, in particular $\alpha,\omega$-amino acids and in particular those comprising 10 or 12 carbon atoms.

10. The use of a polyamide moulding composition according to one of the preceding claims, **characterised in that** the proportion of terephthalic acid within component (A1) is at most 50 mol %, based on the sum of all dicarboxylic acids of component (A1), wherein it is preferable if the proportion of terephthalic acid in component A1 is less than 45 mol % or if no terephthalic acid is contained in component (A1).

11. The use of a polyamide moulding composition according to one of the preceding claims, **characterised in that** the component (A1) is formed by a system of the group selected from: MACM9, MACM10, MACM11, MACM12, MACM13, MACM14, MACM16, MACM18, PACM9, PACM10, PACM11, PACM12, PACM13, PACM14, PACM16, PACM18, TMDC9, TMDC10, TMDC11, TMDC12, TMDC13, TMDC14, TMDC15, TMDC16, TMDC17, TMDC18 or mixtures or copolyamides based on these systems, particularly preferably systems of the following type: MACMI/12, MACMT/12, MACMI/MACMT/12, 6I/6T/MACMI/MACMT/12, 6I/MACMI/MACMT, 6I/PACMI/PACMT, 6I/6T/MACMI, MACMI/MACM36, 12/PACMI or 12/MACMT, 6/PACMT, 6/IPDT, or mixtures thereof MACM9-18/PACM9-18, in particular MACM10/PACM10, MACM12/PACM12 and MACM14/PACM14, and mixtures thereof.

12. The use of a polyamide moulding composition according to one of the preceding claims, **characterised in that** the component (A2) is formed from dicarboxylic acids, specifically aromatic dicarboxylic acids, preferably selected from the group: terephthalic acid, naphthalene dicarboxylic acid and isophthalic acid and also mixtures thereof, and/or from dicarboxylic acids selected from the group:

adipic acid, suberic acid, azelaic acid, sebacic acid, undecane diacid, dodecane diacid, tridecane diacid, tetradecane diacid, pentadecane diacid, hexadecane diacid, heptadecane diacid, octadecane diacid, C36-dimer fatty acid, cis- and/or trans-cyclohexane-1,4-dicarboxylic acid and/or cis- and/or trans-cyolohexane-1,3-dicarboxylic acid (CHDA) and mixtures thereof, wherein adipic acid, isophthalic acid, sebacic acid and dodecane diacid are preferred, and wherein the proportion of terephthalic acid in the total volume of dicarboxylic acids of component (A2) preferably lie in the range from 50 to 100 mol %, preferably in the range from 60 to 95 mol %, and particularly preferably in the range from 65 to 95 mol %, and is also formed from diamines, specifically selected from the following group: 1,4-butanediamine, 1,5-pentanediamine, 2-methyl-1,5-pentanediamine, 2-butyl-2-ethyl-1,5-pentanediamine, 1,6-hexanediamine, 2,2,4-trimethylhexamethylenediamine, 2,4,4-trimethylhexamethylenediamine, 1,8-octanediamine, 2-methyl-1,8-octanediamine, 1,9-nonanediamine, 1,10-decanediamine, 1,11-undecanediamine, 1,12-dodecanediamine, 1,13-tridecanediamine, 1,14-tetradecanediamine, m-xylylenediamine and p-xylylenediamine, wherein 1,6-hexanediamine, 1,10-decanediamine and 1,12-dodecanediamine are preferred,

wherein the polyamides (A2) may also contain lactams or amino carboxylic acids, in particular $\alpha,\omega$-amino acids or lactams comprising 6 to 12 carbon atoms, preferably selected from the following group: m-aminobenzoic acid, p-aminobenzoic acid, caprolactam (CL), $\alpha,\omega$-aminocaproic acid, $\alpha,\omega$-aminoheptanoic acid, $\alpha,\omega$-aminoctanoic acid, $\alpha,\omega$-aminononanoic acid, $\alpha,\omega$-aminodecanoic acid, $\alpha,\omega$-aminoundecanoic acid (AUA), laurolactam (LL) and $\alpha,\omega$-aminododecanoic acid (ADA), wherein caprolactam, $\alpha,\omega$-aminocaproic acid, laurolactam, $\alpha,\omega$-aminoundecanoic acid and $\alpha,\omega$-aminododecanoic acid are particularly preferred.

13. The use of a polyamide moulding composition according to one of the preceding claims, **characterised in that** the component (A) consists of one or more polyamides (A1),
or **in that** the component (A) consists of a mixture of one or more polyamides (A1) with semi-aromatic polyamides (A2), wherein the component (A2) in this mixture makes up at most 50 % by weight, preferably at most 40 % by weight, and particularly preferably at most 35 % by weight, based on the polyamide mixture Aand/or **in that** the proportion of component (A) lies in the range of 30-90 % by weight, preferably in the range of 30-80 % by weight, **in that** the proportion of component (B) lies in the range of 10-65 % by weight, preferably in the range of 20-60 % by weight,
**in that** the proportion of component (C) lies in the range of 1-25 % by weight, preferably in the range of 2-15 % by weight,
**in that** the proportion of component (D) lies in the range of 5-25 % by weight, preferably in the range of 5-20 % by weight, and **in that**
the proportion of component (E) lies in the range from 0.1-2 % by weight, preferably in the range of 0.2-1.5 % by weight,

14. The use of a polyamide moulding composition according to one of the preceding claims, **characterised in that** the component (A1) is formed by a system selected from the group: MACM12, MACMI/12, TMDC12, MACMT/MACMI/12, or a mixture thereof;
and (A2) is preferably simultaneously selected as 6T/6I, wherein the molar ratio lies in the range from 60:40 to 80:20 or in particular in the range from 65:35 to 75:25, wherein the ratio 70:30 is particularly preferred,
and/or (A2) is preferably simultaneously selected as 10T/6T, 12T/6T, 10T/11, 10T/12, 10T/1010, 10T/1012, 10T/106, 10T/126, and/or 10T/612 and/or 3-6T, wherein the molar ratio lies in the range from 60:40 to 95:5 or in particular in the range from 70:30 to 90:10,
wherein the proportion of (A1) preferably makes up 50-95 % by weight, preferably 60-90 % by weight, and particularly preferably 70-90 % by weight, based on the mixture (A).

15. The use of a polyamide moulding composition according to one of the preceding claims as part of an electrical or electronic component, as part of a casing or a casing component, in particular casings or casing parts for portable electronic devices, domestic devices, domestic machines, devices and apparatuses for telecommunications and consumer electronics, inner and outer parts in the automotive sector and in the field of other transport means, inner and outer parts, preferably with a supporting or mechanical function in the field of electrical engineering, furniture, sport, mechanical engineering, sanitation and hygiene, medicine, power engineering and drive technology, particularly preferably mobile telephones, Smartphones, organisers, laptop computers, notebook computers, tablet computers, radios, cameras, watches, calculators, music or video players, navigation devices, GPS devices, electronic picture frames, external hard drives and other electronic storage media, or for the production of yarns, fibres, bicomponent fibres, staple fibres, preferably crimped and/or textured and/or cut to a length of 30-140 mm, filaments and monofilaments.

**Revendications**

1. Utilisation d'une matière à mouler à base de polyamide, constituée de :

(A) 30 - 100 % en poids d'un polyamide ou d'un mélange de polyamides constitué de :

(A1) 50 - 100 % en poids d'au moins un polyamide amorphe et/ou microcristallin ayant une température de transition vitreuse d'au moins 100 °C, mesurée selon la norme ISO 11357-11-2 sur le produit granulé, par Differential Scanning Calorimetry (DSC) à une vitesse de chauffage de 20 °C/min, les polyamides amorphes du polyamide (A1) présentant des chaleurs de fusion d'au maximum 4 J/g, et les polyamides microcristallins du polyamide (A1) présentant des chaleurs de fusion dans la plage de 4 - 25 J/g, déterminées chacune selon ISO 11357-11-2 sur le produit granulé, par Differential Scanning Calorimetry (DSC) à une vitesse de chauffage de 20 °C/min, à base :

(a1) de 20 - 100 % en moles d'au moins une diamine cycloaliphatique ; et
0 - 80 % en moles d'au moins une autre diamine aliphatique et/ou aromatique ;
les % en moles à l'intérieur du composant (a1) se complétant à 100 % en moles, ainsi que
(a2) d'acides dicarboxyliques aromatiques et/ou aliphatiques comportant au moins 6 atomes de carbone,

étant entendu que jusqu'à 45 % en moles de l'ensemble des monomères des composants (a1) et (a2) peuvent être remplacés par des lactames ayant de 6 à 12 atomes de carbone ou des acides aminocarboxyliques ayant de 6 à 12 atomes de carbone :
(A2) 0 - 50 % en poids d'au moins un polyamide partiellement aromatique, différent de (A1) ;

(A1) et (A2) se complétant à 100 % composant (A) en poids,
(B) 10 - 70 % en poids de matières ajoutées fibreuses (B1) et particulaires (B2),
les matières ajoutées fibreuses (B1) étant choisies exclusivement en tant que fibres de verre, et
les matières ajoutées particulaires (B2) étant choisies dans le groupe constitué par: le talc, le mica, les silicates, le quartz, la wollastonite, le kaolin, la craie, le carbonate de calcium broyé ou précipité, la chaux, le feldspath, le sulfate de baryum, l'oxyde de zinc, le sulfure de zinc, le lithopone, et des mélanges de ceux-ci, et les matières ajoutées particulaires (B2) présentent une taille moyenne de particule (D50) dans la plage de 0,1 à 40 μm ;
(C) 0 - 30 % en poids de polymères différents de (A)
(D) 0 - 25 % en poids d'un agent ignifuge
(E) 0 - 3 % en poids d'additifs ;

la somme des composants (A) - (E) représentant 100 % en poids,
pour la fabrication d'un article résistant à la coloration, dans lequel la tendance à la coloration (TC) de l'article est 1 ou 2 comme décrit dans la description avec utilisation de la méthode A.

2. Utilisation d''une matière à mouler à base de polyamide selon la revendication 1, **caractérisée en ce que** dans le composant (B)
les matières ajoutées particulaires (B2) présentent une taille moyenne de particule (D50) dans la plage de 0,2-20 pm, en particulier dans la plage de 0,3-10 μm.

3. Utilisation d'une matière à mouler à base de polyamide selon la revendication 1 ou 2, **caractérisée en ce que** le polyamide du composant (A1) présente une température de transition vitreuse d'au moins 130 °C, d'au moins 140 °C, ou d'au moins 150 °C, le polyamide du composant (A1) présentant de préférence une température de transition vitreuse n'excédant pas 220 °C, ou n'excédant pas 200 °C,
et/ou **caractérisée en ce que** les polyamides amorphes du polyamide (A1) présentent des chaleurs de fusion d'au maximum 2 J/g, déterminées selon ISO 11357-11-2 sur le produit granulé, avec utilisation de Differential Scanning Calorimetry (DSC) à une vitesse de chauffage de 20 °C/min,
et/ou **en ce que** les polyamides microcristallins du composant (A1) présentent des chaleurs de fusion dans la plage de 8 - 22 J/g, déterminées selon ISO 11357-11-2 sur le produit granulé, par Differential Scanning Calorimetry (DSC) à une vitesse de chauffage de 20 °C/min.

4. Utilisation d'une matière à mouler à base de polyamide selon l'une quelconque des revendications précédentes, **caractérisée en ce que** la valeur E (lieu de la couleur) déterminée selon EN ISO 11664-4 dans l'espace de couleur CIELAB est changée par un test de coloration d'une valeur ΔE d'au maximum 6, d'au maximum 5, ou d'au maximum 4 et/ou **en ce que** les articles présentent aussi bien avant qu'après la coloration une luminance L* de préférence > 80, ou > 90, ou > 95, de préférence au lieu ou en plus de celle-ci la valeur de a* ou respectivement, indépendamment de celle-ci, la valeur de b* étant chacune < 10, ou < 5, ou < 3, ou aux environs de 0.

5. Utilisation d'une matière à mouler à base de polyamide selon l'une quelconque des revendications précédentes, **caractérisée en ce qu'**à l'intérieur du composant (A1) la fraction de (a1) est constituée de 40-100 % en moles d'au moins une diamine cycloaliphatique ; et 0-60 % en moles d'au moins une autre diamine aliphatique et/ou aromatique, de préférence de 50-100 % en moles ou 60-100 % en moles d'au moins une diamine cycloaliphatique ; et 0-50 % en moles ou respectivement 0-40 % en moles d'au moins une autre diamine aliphatique et/ou aromatique, de façon particulièrement préférée (a1) étant essentiellement constitué seulement de diamines cycloaliphatiques, et/ou **en ce qu'**à l'intérieur de la fraction (a1) pour ce qui est de l'autre diamine aliphatique et/ou aromatique il s'agit d'une diamine choisie dans le groupe : 1,4-butanediamine, 1,5-pentanediamine, 2-méthyl-1,5-pentanediamine, 2-butyl-2-éthyl-1,5-pentanediamine, 1,6-hexanediamine, 2,2,4-triméthylhexaméthylènediamine, 2,4,4-triméthylhexaméthylènediamine, 1,8-octanediamine, 2-méthyl-1,8-octanediamine, 1,9-nonanediamine, 1,10-décanediamine, 1,11-undécanediamine, 1,12-dodécanediamine, 1,13-tridécanediamine, 1,14-tétradécanediamine, m-xylylènediamine et p-xylylènediamine ou des mélanges de celles-ci, les diamines aliphatiques à chaîne droite ayant de 6 à 10 atomes de carbone étant préférées, 1,6-hexadiamine en particulier.

6. Utilisation d'une matière à mouler à base de polyamide selon l'une quelconque des revendications précédentes, **caractérisée en ce que** ladite au moins une diamine cycloaliphatique (a1) du composant (A1) comporte de 6 à 24 atomes de carbone, et est choisie en particulier dans le groupe suivant : bis-(aminocyclohexyl)méthane, bis-(aminocyclohexyl)propane, norbornanediamine, bis-(aminométhyl)-norbonane, diaminocyclohexanediamine, isophoronediamine, diaminodicyclohexylpropane, chacun sous forme non substituée ou substituée par alkyle, ainsi que des mélanges de ceux-ci, en tant que substituants alkyle étant préférés des groupes alkyle en $C_1$-$C_6$, de préférence en $C_1$-$C_4$, linéaires et/ou ramifiés, en particulier étant préférés les groupes méthyle, éthyle, propyle, isopropyle et butyle, en particulier des groupes méthyle.

7. Utilisation d'une matière à mouler à base de polyamide selon l'une quelconque des revendications précédentes, **caractérisée en ce que** ladite au moins une diamine cycloaliphatique à l'intérieur de (a1) du composant (A1) est choisie dans le groupe suivant : bis-(4-amino-3-méthyl-cyclohexyl)-méthane (MACM), bis-(4-aminocyclohexyl)-méthane (PACM), bis-(4-amino-3-éthyl-cyclohexyl)-méthane (EACM), bis-(4-amino-3,5-diméthyl-cyclohexyl)-méthane (TMDC), 2,2-(4,4'-diamino-dicyclohexyl)propane (PACP) ou des mélanges de ceux-ci, en particulier le bis-(4-amino-3-méthyl-cyclohexyl)-méthane (MACM), le bis-(4-amino-3,5-diméthyl-cyclohexyl)-méthane (TMDC), le bis-(4-aminocyclohexyl)-méthane (PACM) ou des mélanges de ceux-ci étant utilisés de préférence, en outre à l'intérieur du composant (A1) de préférence au maximum 10 % en moles, de préférence au maximum 5 % en moles de ces diamines étant remplacées par d'autres diamines aliphatiques et/ou aromatiques, et de façon particulièrement préférée le composant (A2) étant essentiellement exempt de telles autres diamines non cycloaliphatiques supplémentaires.

8. Utilisation d'une matière à mouler à base de polyamide selon l'une quelconque des revendications précédentes, **caractérisée en ce que** ledit au moins un acide dicarboxylique aromatique et/ou aliphatique ayant au moins 6 atomes de carbone (a2) du composant (A1) est choisi dans le groupe suivant : acides dicarboxyliques aliphatiques à chaîne droite non ramifiés, acides dicarboxyliques aromatiques tels qu'en particulier l'acide isophtalique, l'acide téréphtalique, l'acide naphtalènedicarboxylique, ainsi que des mélanges de ceux-ci, l'acide dicarboxylique aromatique et/ou aliphatique ayant au moins 6 atomes de carbone (a2) du composant (A1) étant de préférence choisi dans le groupe suivant : l'acide isophtalique seul, un mélange d'acide isophtalique et d'acide téréphtalique, de préférence en un rapport molaire de 40/60 à 60/40, ou un acide dicarboxylique en $C_{10}$-$C_{14}$ aliphatique non ramifié, de préférence l'acide 1,10-décane-dicarboxylique, l'acide 1,12-dodécanedicarboxylique.

9. Utilisation d'une matière à mouler à base de polyamide selon l'une quelconque des revendications précédentes, **caractérisée en ce que** le composant (A1) est exempt d'acide téréphtalique et/ou d'acide isophtalique, et en outre de préférence la proportion de lactame et/ou d'acide aminocarboxylique est essentiellement égale à zéro, ou **en ce que**, lorsque le composant (A1) contient de l'acide téréphtalique et/ou de l'acide isophtalique dans le cadre de (a2), ou lorsque (a2) est essentiellement constitué d'acide téréphtalique et/ou d'acide isophtalique, 10-40 % en moles, de préférence 20-35 % en moles de l'ensemble des monomères des composants (a1) et (a2) sont remplacés par des lactames ayant de 6 à 12 atomes de carbone, en particulier ayant 10 ou 12 atomes de carbone, ou des acides aminocarboxyliques ayant de 6 à 12 atomes de carbone, en particulier des acides $\alpha,\omega$-aminés et en particulier ceux ayant 10 ou 12 atomes de carbone.

10. Utilisation d'une matière à mouler à base de polyamide selon l'une quelconque des revendications précédentes, **caractérisée en ce que** la proportion d'acide téréphtalique à l'intérieur du composant (A1) est au maximum de 50 % en moles, par rapport à la somme de tous les acides dicarboxyliques du composant (A1), de préférence la proportion de l'acide téréphtalique dans le composant (A1) étant inférieure à 45 % en moles ou le composant (A1) ne contenant pas d'acide téréphtalique.

11. Utilisation d'une matière à mouler à base de polyamide selon l'une quelconque des revendications précédentes, **caractérisée en ce que** le composant (A2) est constitué d'un système du groupe choisi parmi : MACM9, MACM10, MACM11, MACM12, MACM13, MACM14, MACM16, MACM18, PACM9, PACM10, PACM11, PACM12, PACM13, PACM14, PACM16, PACM18, TMDC9, TMDC10, TMDC11, TMDC12, TMDC13, TMDC14, TMDC15, TMDC16, TMDC17, TMDC18 ou de mélanges ou copolyamides à base de ces systèmes, de façon particulièrement préférée de systèmes du type : MACMI/12, MACMT/12, MACMI/MACMT/12, 6I/6T/MACMI/MACMT/12, 6I/MACMI/MACMT, 6I/PACMI/PACMT, 6I/6T/MACMI, MACMI/MACM36, 12/PACMI ou 12/MACMT, 6/PACMT, 6/IPDT ou de mélanges de ceux-ci MACM9-18/PACM9-18, en particulier MACM10/PACM10, MACMI12/PACM12 et MACM14/PACM14 et des mélanges de ceux-ci.

12. Utilisation d'une matière à mouler à base de polyamide selon l'une quelconque des revendications précédentes, **caractérisée en ce que** le composant (A2) est formé à partir d'acides dicarboxyliques, à savoir d'acides dicarboxyliques aromatiques, de préférence choisis dans le groupe : acide téréphtalique, acide naphtalènedicarboxylique et acide isophtalique ainsi que des mélanges de ceux-ci, et/ou d'acides dicarboxyliques choisis dans le groupe : acide adipique, acide subérique, acide azélaïque, acide sébacique, acide undécanedioïque, acide dodécanedioïque, acide tridécanedioïque, acide tétradécanedioïque, acide pentadécanedioïque, acide hexadécanedioïque, acide heptadécanedioïque, acide octadécanedioïque, acide gras dimère en $C_{36}$, acide cyclohexane-1,4-dicarboxylique cis et/ou trans et/ou acide cyclohexane-1,3-dicarboxylique (CHDA) cis et/ou trans et des mélanges de ceux-ci, l'acide adipique, l'acide isophtalique, l'acide sébacique et l'acide dodécanedioïque étant préférés, et la proportion de l'acide téréphtalique par rapport à la quantité totale d'acides dicarboxyliques du composant (A2) se situant de préférence dans la plage de 50 à 100 % en moles, de préférence dans la plage de 60 à 95 % en moles et de façon particulièrement préférée dans la plage de 65 à 90 % en moles, ainsi que

de diamines, à savoir choisies dans le groupe suivant : 1,4-butanediamine, 1,5-pentanediamine, 2-méthyl-1,5-pentanediamine, 2-butyl-2-éthyl-1,5-pentanediamine, 1,6-hexanediamine, 2,2,4-triméthylhexaméthylènediamine, 2,4,4-triméthylhexaméthylènediamine, 1,8-octanediamine, 2-méthyl-1,8-octanediamine, 1,9-nonanediamine, 1,10-décanediamine, 1,11-undécanediamine, 1,12-dodécanediamine, 1,13-tridécanediamine, 1,14-tétradécanediamine, m-xylylènediamine et p-xylylènediamine, 1,6-hexadiamine, 1,10-décanediamine et 1,12-dodécanediamine étant préférées,

les polyamides (A2) pouvant également contenir des lactames ou des acides aminocarboxyliques, en particulier des acides $\alpha,\omega$-aminés ou des lactames ayant de 6 à 12 atomes de carbone, de préférence choisis dans le groupe suivant : acide m-aminobenzoïque, acide p-aminobenzoïque, caprolactame (CL), acide $\alpha,\omega$-aminocaproïque, acide $\alpha,\omega$-aminoheptanoïque, acide $\alpha,\omega$-amino-octanoïque, acide $\alpha,\omega$-aminononanoïque, acide $\alpha,\omega$-aminodécanoïque, acide $\alpha,\omega$-amino-undécanoïque (AUA), lauryllactame (LL) et acide $\alpha,\omega$-aminododécanoïque (ADA), le caprolactame, l'acide $\alpha,\omega$-aminocaproïque, le lauryllactame, l'acide $\alpha,\omega$-amino-undécanoïque et l'acide $\alpha,\omega$-aminododécanoïque étant particulièrement préférés.

13. Utilisation d'une matière à mouler à base de polyamide selon l'une quelconque des revendications précédentes, **caractérisée en ce que** le composant (A) consiste en un ou plusieurs polyamides (A1),
ou **en ce que** le composant (A) consiste en un mélange d'un ou de plusieurs polyamides (A1) avec des polyamides partiellement aromatique (A2), le composant (A2) représentant dans ce mélange au maximum 50 % en poids, de préférence au maximum 40 % en poids et de façon particulièrement préférée au maximum 35 % en poids, par rapport au mélange de polyamides A,
et/ou **caractérisée en ce que** la proportion du composant (A) se situe dans la plage de 30-90 % en poids, de préférence dans la plage de 30-80 % en poids,
**en ce que** la proportion du composant (B) se situe dans la plage de 10-65 % en poids, de préférence dans la plage de 20-60 % en poids,
**en ce que** la proportion du composant (C) se situe dans la plage de 1-25 % en poids, de préférence dans la plage de 2-15 % en poids,
**en ce que** la proportion du composant (D) se situe dans la plage de 5-25 % en poids, de préférence dans la plage de 5-20 % en poids, et **en ce que**
la proportion du composant (E) se situe dans la plage de 0,1-2 % en poids, de préférence dans la plage de 0,2-1,5 % en poids.

14. Utilisation d'une matière à mouler à base de polyamide selon l'une quelconque des revendications précédentes, **caractérisée en ce que** le composant (A1) est constitué d'un système choisi dans le groupe : MACM12, MACMI/12, TMDC12, MACMT/MACMI/12 ou un mélange de ceux-ci ;
et en outre de préférence en même temps (A1) est choisi en tant que 6T/6I, le rapport molaire se situant dans la plage de 60:40 à 80:20 ou en particulier se situant dans la plage de 65:35 à 75:25, le rapport 70:30 étant particulièrement préféré ;
et/ou en outre de préférence en même temps (A1) est choisi en tant que 10T/6T, 12T/6T, 10T/11, 10T/12, 10T/1010, 10T/1012, 10T/106, 10T/126 et/ou 10T/612 et/ou 3-6T, le rapport molaire se situant dans la plage de 60:40 à 95:5 ou en particulier se situant dans la plage de 70:30 à 90:10,
de préférence la fraction (A1) représentant 50 - 95 % en poids, de préférence 60 - 90 % en poids, de façon particulièrement préférée 70 - 90 % en poids, par rapport au mélange (A).

15. Utilisation d'une matière à mouler à base de polyamide selon l'une quelconque des revendications précédentes, en tant que partie d'un composant électrique ou électronique, d'une coque ou d'un élément constitutif de coque, en particulier d'une coque ou de parties de coque pour des appareils électroniques portables, des appareils ménagers, des machines à usage domestique, des appareils et dispositifs pour la télécommunication et l'électronique de loisir, des pièces intérieures et extérieures dans le secteur automobile et dans le secteur d'autres moyens de transport, des pièces intérieures et extérieures à fonction porteuse ou mécanique dans le secteur de l'électricité, du meuble, du sport, de la construction de machine, du sanitaire et de l'hygiène, de la médecine, la technique de l'énergie et de la propulsion, de façon particulièrement préférée des téléphones mobiles, smartphones, agendas électroniques, ordinateurs portables, notebooks, tablettes, radios, appareils photographiques, montres, calculatrices, lecteurs de musique ou vidéo, appareils de navigation, appareils de GPS, cadres photo électroniques, disques durs externes et autres supports de stockage électroniques, ou pour la fabrication de fils, fibres, fibres bicomposants, fibres discontinues, de préférence frisées et/ou texturées et/ou coupées à une longueur de 30 - 140 mm, de filaments et monofils.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004046279 A
- WO 2012049252 A2
- WO 2012049255 A1
- EP 0725101 A
- EP 0837087 A
- EP 1570983 A
- WO 2009132989 A
- EP 2028231 A
- DE 103463261